# EUROPEAN PATENT APPLICATION

(11) **EP 4 750 178 A1**
(43) Date of publication of application: **27.05.2026**
(21) Application number: 24842384.0
(22) Date of filing: 17.07.2024
(51) Int. Cl.: H04W 64/00

(54) **POSITIONING NEGOTIATION METHOD AND APPARATUS, AND TERMINAL DEVICE AND CORE NETWORK DEVICE**

(30) Priority: 19.07.2023 CN 202310894606
(71) Applicant: Vivo Mobile Communication Co., Ltd., Dongguan, Guangdong 523863 (CN)
(72) Inventor: YU, Hang, Dongguan, Guangdong 523863 (CN); ZHANG, Yizhong, Dongguan, Guangdong 523863 (CN)
(74) Representative: dompatent
(86) International application number: PCT/CN2024/105893
(87) International publication number: WO 2025/016395

(57) **Abstract**

This application provides a positioning negotiation method and apparatus, a terminal device, and a core network device, and relates to the communication field. The positioning negotiation method includes: sending, by a terminal device, a first message to a first core network device, where the first message is used for performing network registration or establishing a user-plane positioning connection; and the first message includes one or more of the following: a first capability, a first specified protocol, and first confirmation information. The first capability is used to indicate a transport protocol supported by the terminal device for transmitting user-plane positioning information. The first specified protocol includes a transport protocol that the terminal device expects to use for transmitting user-plane positioning information. The first confirmation information is used to indicate whether the terminal device accepts or rejects using a second specified protocol to transmit user-plane positioning information, where the second specified protocol includes a transport protocol specified by the first core network device or a second core network device for transmitting user-plane positioning information.

## Description

### CROSS-REFERENCE TO RELATED APPLICATIONS

This application claims priority to Chinese Patent Application No. 202310894606.3, filed on July 19, 2023 in China, which is incorporated herein by reference in its entirety.

### TECHNICAL FIELD

This application relates to the field of communication, and more specifically, relates to a positioning negotiation method and apparatus, a terminal device, and a core network device.

### BACKGROUND

In a new radio (New Radio, NR) system, user-plane positioning has been introduced on the basis of control plane positioning. For example, positioning-related information can be transmitted in large volumes or at high frequency through the user plane to reduce the load on the control plane and improve the positioning experience. However, the specific transport protocol to be used for transmitting user-plane positioning information is an issue that needs to be resolved.

### SUMMARY

This application provides a positioning negotiation method and apparatus, a terminal device and a core network device, which can resolve the technical problem of being unable to determine which transport protocol to be used for transmitting user-plane positioning information.

According to a first aspect, a positioning negotiation method is provided, including:
sending, by a terminal device, a first message to a first core network device, where the first message is used for performing network registration or establishing a user-plane positioning connection; where
the first message includes one or more of the following: a first capability, a first specified protocol, and first confirmation information; and
the first capability is used to indicate a transport protocol supported by the terminal device for transmitting user-plane positioning information; the first specified protocol includes a transport protocol that the terminal device expects to use for transmitting user-plane positioning information; and the first confirmation information is used to indicate whether the terminal device accepts or rejects using a second specified protocol to transmit user-plane positioning information, where the second specified protocol includes a transport protocol specified by the first core network device or a second core network device for transmitting user-plane positioning information.

According to a second aspect, a positioning negotiation method is provided, including:
sending, by a first core network device, a second message to a terminal device, where the second message is used for network registration or establishing a user-plane positioning connection; where
the second message includes one or more of the following: a second capability, a second specified protocol, and a second cause value; and
the second capability is used to indicate a transport protocol supported by a network for transmitting user-plane positioning information, the second specified protocol includes a transport protocol specified by the first core network device or a second core network device for transmitting user-plane positioning information, and the second cause value is used to indicate a reason why the network rejects a user-plane positioning connection establishment request initiated by the terminal device.

According to a third aspect, a positioning negotiation method is provided, including:
sending, a second core network device, a third message to a first core network device; where
the third message is used for establishing a user-plane positioning connection, the third message includes a second specified protocol, and the second specified protocol includes a transport protocol specified by the second core network device for transmitting user-plane positioning information.

According to a fourth aspect, a positioning negotiation apparatus is provided, including:
a sending unit, configured to send a first message to a first core network device, where the first message is used for performing network registration or establishing a user-plane positioning connection; where
the first message includes one or more of the following: a first capability, a first specified protocol, and first confirmation information; and
the first capability is used to indicate a transport protocol supported by the positioning negotiation apparatus for transmitting user-plane positioning information; the first specified protocol includes a transport protocol that the positioning negotiation apparatus expects to use for transmitting user-plane positioning information; and the first confirmation information is used to indicate whether the positioning negotiation apparatus accepts or rejects use of a second specified protocol for transmitting user-plane positioning information, where the second specified protocol includes a transport protocol specified by the first core network device or a second core network device for transmitting user-plane positioning information.

According to a fifth aspect, a positioning negotiation apparatus is provided, including:
a sending unit, configured to send a second message to a terminal device, where the second message is used for network registration or establishing a user-plane positioning connection; where
the second message includes one or more of the following: a second capability, a second specified protocol, and a second cause value; and
the second capability is used to indicate a transport protocol supported by a network for transmitting user-plane positioning information, the second specified protocol includes a transport protocol specified by the positioning negotiation apparatus or a second core network device for transmitting user-plane positioning information, and the second cause value is used to indicate a reason why the network rejects a user-plane positioning connection establishment request initiated by the terminal device.

According to a sixth aspect, a positioning negotiation apparatus is provided, including:
a sending unit, configured to send a third message to a first core network device; where
the third message is used for establishing a user-plane positioning connection, the third message includes a second specified protocol, and the second specified protocol includes a transport protocol specified by the positioning negotiation apparatus for transmitting user-plane positioning information.

According to a seventh aspect, a terminal device is provided, including a processor and a memory; where the memory is configured to store a computer program, and the processor is configured to invoke and execute the computer program stored in the memory to perform the method according to the first aspect or any one of its implementations.

According to an eighth aspect, a core network device is provided, where the core network device is a first core network device, including a processor and a memory; where the memory is configured to store a computer program, and the processor is configured to invoke and execute the computer program stored in the memory to perform the method according to the second aspect or any one of its implementations.

According to a ninth aspect, a core network device is provided, where the core network device is a second core network device, including a processor and a memory; where the memory is configured to store a computer program, and the processor is configured to invoke and execute the computer program stored in the memory to perform the method according to the third aspect or any one of its implementations.

According to a tenth aspect, an apparatus is provided, for implementing the method according to any one of the first aspect to the third aspect or any one of their implementations. Specifically, the apparatus includes a processor configured to invoke and run a computer program from a memory, so that a device in which the apparatus is installed performs the method according to any one of the first aspect to the third aspect or any one of their implementations.

According to an eleventh aspect, a chip is provided, for implementing the method according to any one of the first aspect to the third aspect or any one of their implementations. Specifically, the chip includes a processor configured to invoke and run a computer program from a memory, so that a device in which the chip is installed performs the method according to any one of the first aspect to the third aspect or any one of their implementations.

According to a twelfth aspect, a computer-readable storage medium is provided, for storing a computer program, where the computer program causes a computer to execute the method according to any one of the first aspect to the third aspect or any one of their implementations.

Through the technical solution of the first aspect, the terminal device can provide, via the first message, the network side with information related to a transport protocol for transmitting user-plane positioning information, so that the terminal side and the network side can negotiate and determine a transport protocol to be used for transmitting user-plane positioning information, thereby improving transmission efficiency of user-plane positioning information.

Through the technical solution of the second aspect, the first core network device can provide, via the second message, the terminal device with information related to a transport protocol for transmitting user-plane positioning information, so that the terminal side and the network side can negotiate and determine a transport protocol to be used for transmitting user-plane positioning information, thereby improving transmission efficiency of user-plane positioning information.

Through the technical solution of the third aspect, the second core network device can provide, via the third message, the first core network device and the terminal device with information related to a transport protocol for transmitting user-plane positioning information, so that the terminal side and the network side can negotiate and determine a transport protocol to be used for transmitting user-plane positioning information, thereby improving transmission efficiency of user-plane positioning information.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from these accompanying drawings without creative efforts.
FIG. 1 is a schematic architectural diagram of a communication system according to an embodiment of this application;
FIG. 2 is a schematic diagram of network-initiated user-plane positioning connection establishment according to this application;
FIG. 3 is a schematic diagram of terminal-initiated user-plane positioning connection establishment according to this application;
FIG. 4 is a schematic diagram of a SUPL protocol stack according to this application;
FIG. 5 is a schematic flowchart of a positioning negotiation method according to an embodiment of this application;
FIG. 6 is a schematic flowchart of another positioning negotiation method according to an embodiment of this application;
FIG. 7 is a schematic flowchart of still another positioning negotiation method according to an embodiment of this application;
FIG. 8 to FIG. 11 are schematic flowcharts of positioning negotiation according to an embodiment of this application;
FIG. 12 is a schematic block diagram of a positioning negotiation apparatus according to an embodiment of this application;
FIG. 13 is a schematic block diagram of another positioning negotiation apparatus according to an embodiment of this application;
FIG. 14 is a schematic block diagram of still another positioning negotiation apparatus according to an embodiment of this application;
FIG. 15 is a schematic block diagram of a communication device according to an embodiment of this application;
FIG. 16 is a schematic block diagram of an apparatus according to an embodiment of this application; and
FIG. 17 is a schematic block diagram of a communication system according to an embodiment of this application.

### DETAILED DESCRIPTION OF EMBODIMENTS

The following describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts fall within the protection scope of this application.

The terms used in the embodiment section of this application are merely used to explain specific embodiments of this application and are not intended to limit this application. The terms "first", "second", "third", and "fourth" in the specification and claims of this application and the drawings are used to distinguish different objects rather than to describe a specific order. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, product, or device. In addition, "and/or" used in this specification and claims indicates at least one of the connected objects. For example, "A and/or B and/or C" represents the following seven cases: only A; only B; only C; both A and B; both B and C; both A and C; and all A, B, and C.

It should be understood that the "indication" mentioned in the embodiments of this application may be a direct indication or an indirect indication, or may represent an association relationship. For example, A indicating B may mean that A directly indicates B, for example, B can be obtained through A; or may mean that A indirectly indicates B, for example, A indicates that C and B can be obtained through C; or may mean that there is an association relationship between A and B.

In the description of the embodiment of this application, the term "correspondence" may indicate a direct or indirect correspondence relationship between two items, may also indicate an association relationship between two items, or may refer to a relationship of indicating and being indicated, configuring and being configured, or the like.

The technical solutions in the embodiments of this application may be applied to various communication systems, for example: a long term evolution (Long Term Evolution, LTE) system, an advanced long term evolution (Advanced long term evolution, LTE-A) system, a new radio (New Radio, NR) system, an evolved system of NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (Non-Terrestrial Networks, NTN) system, a universal mobile telecommunication system (Universal Mobile Telecommunication System, UMTS), wireless local area networks (Wireless Local Area Networks, WLAN), internet of things (internet of things, IoT), wireless fidelity (Wireless Fidelity, WiFi), a 5th-generation (5th-Generation, 5G) system, a 6th-generation (6th-Generation, 6G) system, or other evolved communication systems.

The communication system in the embodiments of this application may be applied to licensed spectrum and/or unlicensed spectrum, where the unlicensed spectrum may alternatively be considered as shared spectrum, and the licensed spectrum may alternatively be considered as non-shared spectrum.

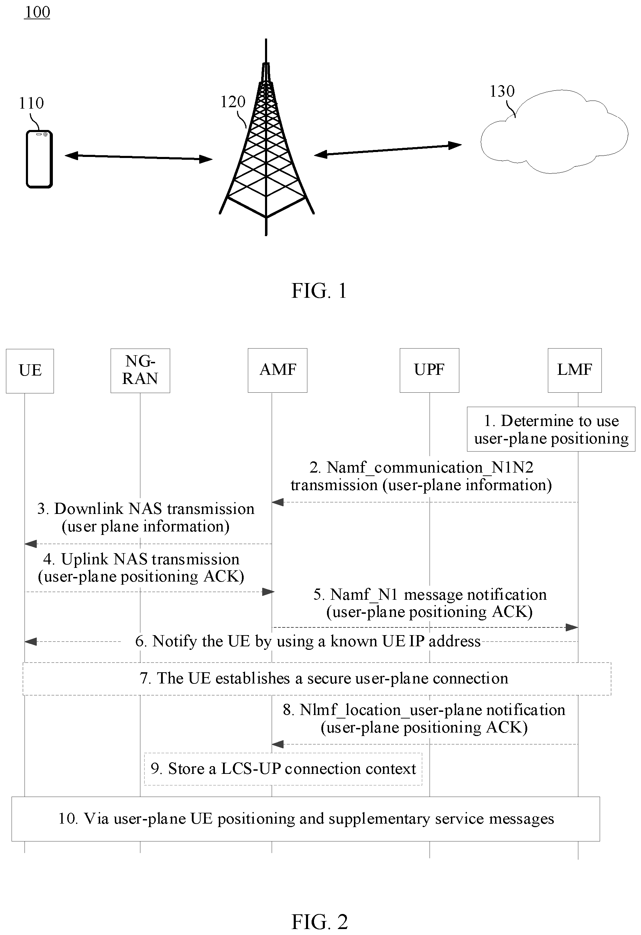

For example, the communication system 100 to which the embodiments of this application are applied may be as shown in FIG. 1. The communication system 100 may include a terminal device 110, an access network device 120, and a core network device 130, where the terminal device 110 can be connected to the core network device 130 via the access network device 120. The access network device 120 can provide communication coverage for a specific geographic area and can communicate with terminal devices located within the coverage area. Specifically, the terminal device 110 may also be referred to as user equipment (User Equipment, UE), a terminal, or other similar names.

In some embodiments, the terminal device 110 may be a terminal-side device such as a mobile phone, a tablet computer (Tablet Personal Computer), a laptop computer (Laptop Computer), a notebook computer, a personal digital assistant (personal digital assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a smart wrist band, smart earphones, smart glasses, smart jewelry (smart bracelet, smart wristband, smart ring, smart necklace, smart anklet, smart ankle bracelet, or the like), smart strap, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit.

In some embodiments, the access network device 120 may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a Node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

In some embodiments, the core network device 130 may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is introduced as an example, and the specific type of the core network device is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), a sensing function (Sensing Function, SF), and the like. It should be noted that in the embodiments of this application, only the core network device in the NR system is introduced as an example, and the specific type of the core network device is not limited.

To facilitate a better understanding of the embodiments of this application, user-plane positioning related to this application is described below.

The NR system supports two ways of establishing a user-plane positioning connection: network-initiated user-plane positioning connection establishment (Network-initiated LCS-UP initiation) and terminal-initiated user-plane positioning connection establishment (UE-initiated LCS-UP initiation). Between a terminal device (UE) and a location management function (Location Management Function, LMF) entity, a large amount of positioning-related data may be transmitted over the user plane, or positioning-related data may be transmitted between the UE and the LMF entity over the user plane at a higher frequency. It should be noted that which protocol stack is used to encapsulate and transmit user-plane positioning messages has not yet been determined.

Specifically, the network-initiated user-plane positioning connection establishment (Network-initiated LCS-UP initiation) may be as shown in FIG. 2. The LMF entity on the network side determines to use user-plane positioning, and informs an access and mobility management function (AMF) entity of user-plane positioning information, and then the AMF entity interacts with the UE via non-access stratum (Non-Access Stratum, NAS) signalling. After receiving an acknowledgement (Acknowledgement, ACK) message from the UE, the AMF entity replies to the LMF entity. Then the UE establishes a user-plane positioning connection with the LMF entity.

As shown in FIG. 2, the network-initiated user-plane positioning connection establishment process may include at least one of the following steps:

Step 1: Based on a UE user-plane positioning capability and other implementation factors, the LMF entity determines whether to continue the positioning procedure via a user-plane connection between the UE and the LMF entity; if a user-plane connection context for the target UE already exists in the LMF entity and the LMF entity determines to use the user-plane connection for positioning, Step 1 is skipped. The LMF entity may select user-plane positioning for a specific positioning method (for example, motion sensor-based method) and, based on implementation and local configuration, determine which positioning method (and corresponding positioning data) requires user-plane transmission.

Step 2 (optional): If the LMF entity determines to use user-plane positioning and no secure user-plane connection has been established between the UE and the LMF entity, the LMF entity sends user-plane information to the AMF entity to indicate the UE to utilize user plane for positioning. The user-plane information includes a user-plane positioning address of the LMF and security-related information.

Step 3 (optional): When the AMF entity receives the user-plane information from the LMF entity in Step 2, the AMF entity sends it to the UE via a downlink NAS transport (DL NAS TRANSPORT) message.

Step 4 (optional): If no established applicable PDU session for user-plane positioning, the UE uses a UE route selection policy (UE Route Selection Policy, URSP), where the URSP includes user-plane positioning related to PDU session parameters, such as a dedicated data network name (Data Network Name, DNN) and single-network slice selection assistance information (Single-Network Slice Selection Assistance Information, S-NSSAI), to establish a PDU session for user-plane positioning. The UE may send a confirmation to the LMF entity via the AMF entity to indicate the user-plane connection for the positioning service having been successfully used or the user-plane connection being unable to be used, for example, no suitable PDU session is established.

Step 5 (optional): The AMF entity sends the confirmation received in Step 4 to the LMF entity via a Namf_N1messageNotify (Namf_N1messageNotify) service.

Step 6 (optional): If the LMF entity knows UE Internet protocol (Internet Protocol, IP) address information, the LMF entity may notify the UE to setup a secure user-plane connection through a known UE IP address.

Step 7 (optional): The UE establishes a secure user-plane connection with the LMF entity; if the LMF entity has sent its fully qualified domain name (Fully Qualified Domain Name, FQDN) to the UE, a domain name system (Domain Name System, DNS) server/resolver is used to resolve an IP address of the LMF entity (for example, an edge application server discovery function (edge application server discovery function, EASDF) or local DNS for local LMF entity address resolution).

Step 8 (optional): The LMF entity indicates to the AMF entity in a location user-plane notify (Nmmf_Location_UP Notify) message that the user-plane connection between the UE and the LMF has been established.

Step 9 (optional): The AMF entity stores a location service user plane (Location Service User Plane, LCS-UP) connection context as part of the UE context.

Step 10: If the LMF entity or the UE determines to use the user-plane connection for positioning and a secure user-plane connection has been established, LTE positioning protocol (LTE positioning protocol, LPP) messages are transmitted between the UE and the LMF entity for UE-based positioning, UE-assisted positioning, and delivery of assistance data; and supplementary service event report messages from the UE may also be delivered to the LMF entity via the established user-plane connection.

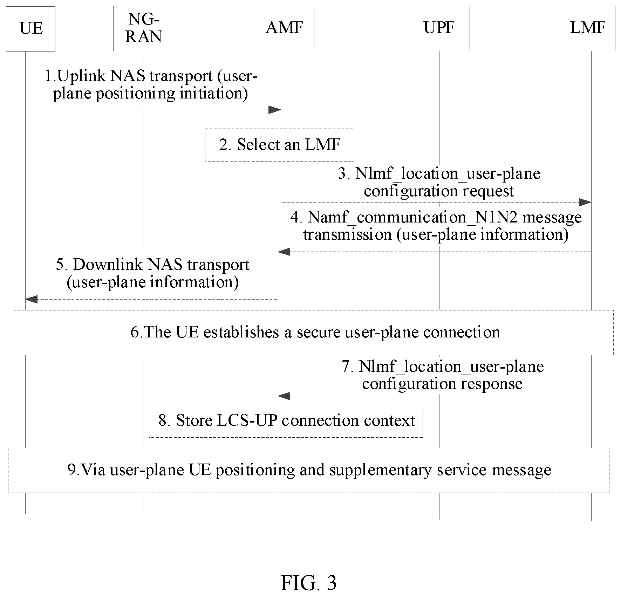

Specifically, the terminal-initiated user-plane positioning connection establishment (UE-initiated LCS-UPP initiation) may be as shown in FIG. 3. The terminal sends a user-plane positioning establishment request to the AMF entity, and the AMF entity, based on the request, performs an LMF entity selection procedure to select an appropriate LMF entity for the current user-plane positioning task and establishes a connection from the UE to the LMF entity via subsequent signalling.

As shown in FIG. 3, the terminal-initiated user-plane positioning connection establishment process may include at least one of the following steps:

Step 1: If the UE determines to prepare a user-plane connection for an upcoming positioning request, the UE may send a user-plane establishment request to the AMF entity via a NAS message.

Step 2 (optional): If the UE is authorized based on UE subscription to use user-plane positioning, the AMF entity selects an LMF entity capable of establishing a user-plane session for positioning with the UE.

Step 3 (optional): The AMF entity sends a positioning user-plane configuration (Nmmf_Location_UP Config) request to the LMF entity to request establishment of an LCS-UP connection.

Step 4 (optional): If the LMF entity accepts user-plane positioning and no secure user-plane connection has been established between the UE and the LMF entity, the LMF entity sends user-plane information to the AMF entity to indicate the UE to accept and use the user plane for positioning; where the user-plane information includes a user-plane positioning address of the LMF entity and security-related information.

Step 5 (optional): When the AMF entity receives the user-plane information from the LMF entity in Step 4, the AMF entity forwards it to the UE via a downlink NAS transport (DL NAS TRANSPORT) message.

Step 6 (optional): The UE establishes a secure user-plane connection with the LMF entity.

Step 7 (optional): The LMF entity responds to the AMF entity that the user-plane connection between the UE and the LMF entity has been established.

Step 8 (optional): The AMF entity stores the LCS-UP connection context as part of the UE context.

Step 9 (optional): After the secure user-plane connection is established, if the LMF entity determines to use the user-plane connection for positioning after receiving a positioning request from the AMF entity, or if the UE determines to use the user-plane connection for positioning, LPP messages are transmitted between the UE and the LMF entity for UE-based positioning, UE-assisted positioning, and delivery of assistance data; and supplementary service event report messages from the UE may also be delivered to the LMF entity via the established user-plane connection.

To facilitate a better understanding of the embodiments of this application, the secure user plane location (Security User Plane Location, SUPL) related to this application is described below.

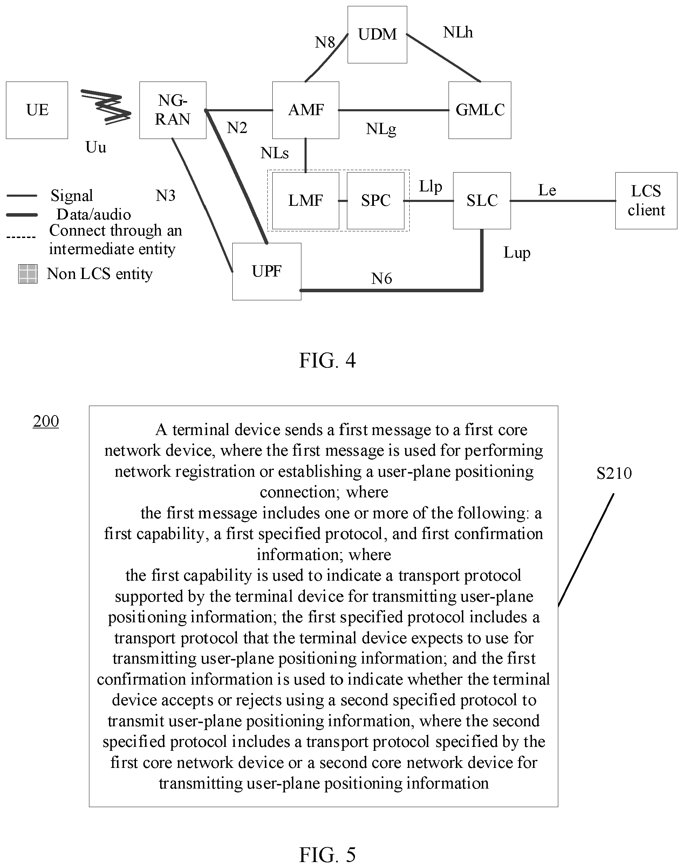

The control-plane positioning protocol is encapsulated and location services are performed using a data network without affecting the control plane, thereby offloading any changes to the service provider infrastructure. This is a set of standard protocols developed by the open mobile alliance (OPEN MOBILE ALLIANCE, OMA), and SUPL has been introduced into the 3rd generation partnership project (The 3rd Generation Partnership Project, 3GPP) NR architecture. As shown in FIG. 4, in the research architecture before Rel-18, on the UE side, there is a SUPL enabled terminal (SUPL enabled terminal, SET) module (a functional module specified in OMA SUPL); and on the network side, there are a SUPL location center (SUPL location center, SLC) and a SUPL positioning center (SUPL Positioning Center, SPC), which are deployed close to the LMF entity (that is, the SLC and the SPC can perform fast information interaction with the LMF) and support interaction interfaces with the LMF entity and location service (Location Service, LCS) clients (client), implementing the transfer and communication of user-plane positioning information through the user plane function (UPF).

Specifically, as shown in FIG. 4, the UE is connected to the next generation radio access network (Next Generation Radio Access Network, NG-RAN) via the Uu interface, the NG-RAN is connected to the user plane function (UPF) via the N3 interface, the NG-RAN is connected to the access and mobility management function (AMF) via the N2 interface, the AMF is connected to the LMF via the NLs interface, the AMF is connected to the gateway mobile location center (Gateway Mobile Location Center, GMLC) via the NLg interface, the AMF is connected to the unified data management (UDM) via the N8 interface, the UDM is connected to the GMLC via the NLh interface, the LMF can be directly connected to the SPC, the SPC is connected to the SLC via the Llp interface, the SLC is connected to the LCS client via the Le interface, and the UPF is connected to the SLC via the N6 interface or the Lup interface.

It should be noted that, in FIG. 4, Lup and N6 refer to a same interface channel, but from different perspectives: from the 3GPP architecture perspective, it is called N6; and from inside the SUPL server, this interface is called Lup.

To facilitate a better understanding of the embodiments of this application, the problem solved by this application is described below.

At the present stage, there may be two user-plane location transport protocols: one is SUPL, and the other is a layer 3 (layer 3) standard protocol (for example, location service user plane protocol (Location Service User Plane Protocol, LCS-UPP)). If both user-plane location transport protocols can be deployed on the terminal side and the network side, how to finally negotiate which user-plane location transport protocol (also referred to as protocol stack) to use is still under discussion. More specifically: if both user-plane location transport protocols are optional on the terminal side and the network side, a negotiation problem exists; and if both user-plane location transport protocols are mandatory on side A (the terminal side or the network side) and optional on side B (the network side or the terminal side), there is a problem of how to inform side A which user-plane location transport protocol to use.

Based on the above problems, this application proposes a positioning negotiation method by which the terminal side and the network side can negotiate and determine the transport protocol to be used for transmitting user-plane positioning information, thereby improving the transmission efficiency of user-plane positioning information.

To facilitate understanding of the technical solutions of the embodiments of this application, the technical solutions of this application are described in detail below through specific embodiments. The following related technologies, as optional solutions, may be arbitrarily combined with the technical solutions of the embodiments of this application, and all of them fall within the protection scope of the embodiments of this application. The embodiments of this application include at least part of the following content.

FIG. 5 is a schematic flowchart of a positioning negotiation method 200 according to an embodiment of this application. As shown in FIG. 5, the positioning negotiation method 200 may include at least part of the following contents:
S210: A terminal device sends a first message to a first core network device, where the first message is used for performing network registration or establishing a user-plane positioning connection.

The first message includes one or more of the following: a first capability, a first specified protocol, and first confirmation information.

The first capability is used to indicate a transport protocol supported by the terminal device for transmitting user-plane positioning information; the first specified protocol includes a transport protocol that the terminal device expects to use for transmitting user-plane positioning information; and the first confirmation information is used to indicate whether the terminal device accepts or rejects using a second specified protocol to transmit user-plane positioning information, where the second specified protocol includes a transport protocol specified by the first core network device or a second core network device for transmitting user-plane positioning information.

It should be understood that FIG. 5 illustrates steps or operations of the positioning negotiation method 200, but these steps or operations are only examples. Other operations or variations to the operations in FIG. 5 may also be performed in the embodiments of this application.

The transport protocol for transmitting user-plane positioning information described in the embodiments of this application may also be referred to as a protocol stack for transmitting user-plane positioning information or a user-plane protocol stack, which is not limited in the embodiments of this application.

It should be noted that the embodiments of this application take two transport protocols for transmitting user-plane positioning information (that is, a first transport protocol and a second transport protocol) as an example for illustration. Certainly, the embodiments of this application are also applicable to more (for example, 3, 4, 5, ..., or the like) transport protocols for transmitting user-plane positioning information. For details, reference may be made to the related description in the embodiments of this application. For brevity, details are not described herein again.

In some embodiments, the first transport protocol is a user-plane location transport protocol not defined by 3GPP, and the second transport protocol is a user-plane location transport protocol defined by 3GPP.

In some embodiments, the first transport protocol is secure user plane location (SUPL). Certainly, the first transport protocol may also be any other user-plane location transport protocol not defined by 3GPP.

In some embodiments, the second transport protocol is location service user plane protocol (LCS-UPP). Certainly, the second transport protocol may also be any other user-plane location transport protocol defined by 3GPP.

In the embodiments of this application, the user-plane positioning procedure may be initiated or triggered by the terminal device or by the network side (for example, the second core network device).

In some embodiments, the first core network device may be a core network device, for example, an AMF entity. Certainly, the first core network device may also be any other core network device, which is not limited in the embodiments of this application.

In some embodiments, the second core network device is a device that establishes a user-plane positioning connection with the terminal device, for example, the second core network device is an LMF entity. Certainly, the second core network device may also be any other core network device, which is not limited in the embodiments of this application.

In some embodiments, the second core network device may alternatively be replaced by a third-party device (for example, a location service (Location Service, LCS) client (client)) or a 5G core network (5G Core Network, 5GC) network function (network function, NF) entity (for example, a network data analytics function (Network Data Analytics Function, NWDAF)).

In some embodiments, in a case that the first message is used for performing network registration, the first message includes the first capability.

In one implementation, the first message may be a registration request (registration request) message. Specifically, the terminal device sends a registration request message to the first core network device (for example, the AMF entity) to provide registration information and perform network registration, and the terminal device provides the first capability (that is, the transport protocol supported by the terminal device for transmitting user-plane positioning information) in the registration request message.

Specifically, for example, in a case that bit information carried in the registration request message by the terminal device indicates that the terminal device supports user-plane positioning, the terminal device provides the first capability (that is, the transport protocol supported by the terminal device for transmitting user-plane positioning information) in the registration request message.

In some embodiments, in a case that the first message is used for establishing a user-plane positioning connection, the first message includes, but is not limited to, one or more of the following: the first capability, the first specified protocol, and the first confirmation information.

In some embodiments, in a case that the first message is used for establishing a user-plane positioning connection, the first message may be a user-plane positioning request message sent by the terminal device. In this case, the first message may include the first capability and/or the first specified protocol. In this case, it can be understood that the terminal device initiates or triggers the user-plane positioning procedure.

In some embodiments, in a case that the first message is used for establishing a user-plane positioning connection, the first message may be a user-plane positioning response message or a user-plane positioning reply message sent by the terminal device. In this case, the first message may include the first confirmation information, and optionally, the first message may further include the first capability and/or the first specified protocol. In this case, it can be understood that the network side (such as the LMF entity) initiates or triggers the user-plane positioning procedure.

In some embodiments, the first capability includes but is not limited to one of the following:
the terminal device supports using the first transport protocol to transmit user-plane positioning information;
the terminal device supports using the second transport protocol to transmit user-plane positioning information; and
the terminal device supports using the first transport protocol and the second transport protocol to transmit user-plane positioning information.

For example, that the terminal device supports using the first transport protocol to transmit user-plane positioning information includes:
the terminal device supports using the first transport protocol to transmit user-plane positioning information, and the terminal device does not support using the second transport protocol to transmit user-plane positioning information; or
the terminal device supports using the first transport protocol to transmit user-plane positioning information, and the terminal device does not support using other transport protocols to transmit user-plane positioning information; or
the terminal device supports using only the first transport protocol to transmit user-plane positioning information.

For example, that the terminal device supports using the second transport protocol to transmit user-plane positioning information includes:
the terminal device supports using the second transport protocol to transmit user-plane positioning information, and the terminal device does not support using the first transport protocol to transmit user-plane positioning information; or
the terminal device supports using the second transport protocol to transmit user-plane positioning information, and the terminal device does not support using other transport protocols to transmit user-plane positioning information; or
the terminal device supports using only the second transport protocol to transmit user-plane positioning information.

In some embodiments, by indicating that the terminal device supports the user-plane positioning capability, the first capability may indicate that the terminal device supports using the first transport protocol and/or the second transport protocol to transmit user-plane positioning information. That is, in a case that the terminal device supports the user-plane positioning capability, it is defaulted that the terminal device supports using the first transport protocol and/or the second transport protocol to transmit user-plane positioning information.

For example, in a case that the terminal device supports the user-plane positioning capability, it is defaulted that the terminal device supports using the first transport protocol to transmit user-plane positioning information.

For another example, in a case that the terminal device supports the user-plane positioning capability, it is defaulted that the terminal device supports using the second transport protocol to transmit user-plane positioning information.

For still another example, in a case that the terminal device supports the user-plane positioning capability, it is defaulted that the terminal device supports using the first transport protocol and the second transport protocol to transmit user-plane positioning information.

In some embodiments, the first specified protocol includes but is not limited to one of the following:
a first transport protocol, a second transport protocol, the first transport protocol or the second transport protocol, and the first transport protocol and the second transport protocol.

For example, in a case that the first message includes the first capability and does not include the first specified protocol, if the first capability includes that the terminal device supports using the first transport protocol and the second transport protocol to transmit user-plane positioning information, it is defaulted that the terminal device expects to use the first transport protocol and/or the second transport protocol to transmit user-plane positioning information.

For example, in a case that the first specified protocol includes the first transport protocol and the second transport protocol, one implementation is to use the first transport protocol to transmit an LPP message and use the second transport protocol to transmit a location service supplementary service (Location Service Supplementary service, LCS-SS) message.

In some embodiments, the second specified protocol includes but is not limited to one of the following:
a first transport protocol, a second transport protocol, the first transport protocol or the second transport protocol, and the first transport protocol and the second transport protocol.

For example, in a case that the second specified protocol includes the first transport protocol and the second transport protocol, one implementation is to use the first transport protocol to transmit an LPP message and use the second transport protocol to transmit a location service supplementary service (LCS-SS) message.

In some embodiments, in a case that the first message includes the first confirmation information, and the first confirmation information indicates that the terminal device rejects using the second specified protocol to transmit the user-plane positioning information, the first message further includes a first cause value, where the first cause value is used to indicate a reason why the terminal device rejects a user-plane positioning connection establishment request initiated by a network.

In some embodiments, the first cause value includes but is not limited to one of the following: the second specified protocol is not supported, the first transport protocol is not supported, and the second transport protocol is not supported.

In some embodiments, in a case that the first message includes the first cause value, the first message further includes a transport protocol supported by the terminal device for transmitting user-plane positioning information.

Specifically, for example, the first cause value includes that the second specified protocol is not supported. Assuming that the second specified protocol includes the first transport protocol, in this case, the first message further includes that the terminal device supports using the second transport protocol to transmit user-plane positioning information.

Specifically, for example, the first cause value includes that the second specified protocol is not supported. Assuming that the second specified protocol includes the second transport protocol, in this case, the first message further includes that the terminal device supports using the first transport protocol to transmit user-plane positioning information.

Specifically, for example, the first cause value includes that the first transport protocol is not supported; in this case, the first message further includes that the terminal device supports using the second transport protocol to transmit user-plane positioning information.

Specifically, for example, the first cause value includes that the second transport protocol is not supported; in this case, the first message further includes that the terminal device supports using the first transport protocol to transmit user-plane positioning information.

In this embodiment of this application, a difference between the first capability (that is, the transport protocol supported by the terminal device for transmitting user-plane positioning information) and the user-plane positioning capability of the terminal device lies in that the latter refers to whether the user-plane positioning capability is supported, while the former refers to what transport protocol is supported for transmitting user-plane positioning information in a case that the user-plane positioning capability is supported.

In some embodiments, in a case that the first message includes the first capability, the terminal device may indicate the first capability in a 5G system mobility management (5G System Mobility Management, 5GMM) capability (capability). Specifically, for example, assuming that the first transport protocol is SUPL and the second transport protocol is LCS-UPP, an information element identifier (information element identity, IEI) of the 5GMM capability may be shown in Table 1. The first capability may occupy bits 3 and 4 in octet (octet) 9* in the 5GMM capability IEI, where bit 3 in octet 9* is an LCS-UPP support (LCS-UPP support, LUS) field, and bit 4 in octet 9* is a SUPL support (SUPL support, SUPLS) field. Specifically, as shown in Table 2, a value 0 for the LCS-UPP support (LUS) field indicates that the terminal device does not support using LCS-UPP to transmit user-plane positioning information, and a value 1 for the LCS-UPP support (LUS) field indicates that the terminal device supports using LCS-UPP to transmit user-plane positioning information. A value 0 for the SUPL support (SUPLS) field indicates that the terminal device does not support using SUPL to transmit user-plane positioning information, and a value 1 for the SUPL support (SUPLS) field indicates that the terminal device supports using SUPL to transmit user-plane positioning information. It should be noted that the LCS-UPP support (LUS) field and SUPL support (SUPLS) field may alternatively occupy other bits in octet 9*, or the LCS-UPP support (LUS) field and SUPL support (SUPLS) field may alternatively occupy other octets, which is not limited in the embodiments of this application.

**Table 1**

| | 8 | 7 | 6 | 5 | 4 | 3 | 2 | 1 | |
|---|---|---|---|---|---|---|---|---|---|
| 5GMM capability IEI (5GMM capability information element identifier) | | | | | | | | | octet 1 |
| Length of 5GMM capability contents (length of 5GMM capability text) | | | | | | | | | octet 2 |
| SGC | 5G-IPHC-CP CIoT | N3 data (data) | | 5G-CP CIoT | RestrictEC | LPP | HO attach (attach) | S1 mode (mode) | octet 3 |
| RACS | NSSAA | 5G-LCS | | V2XCNPC5 | V2XCEPC5 | V2X | 5G-UP CIoT | 5GSRVCC | octet 4* |
| 5G ProSe-l2 relay (relay) | 5G ProSe-dc | 5G ProSe-dd | | ER-NSSAI | 5G-EHC-CP CIoT | MultipleUP (multiple UP) | WUSA | CAG | octet 5* |
| PR | RPR | PIV | | NCR | NR-PSSI | 5G ProSe-l3rmt | 5G ProSe-l2rmt | 5G ProSe-l3 relay | octet 6* |
| UN-PER | ESI | NSAG | | Ex-CAG | SSNPNSI | EventNotification (event notification) | MINT | NSSRG | octet 7* |
| SBTS | NSR | LADN-DS | | RAN timing (timing) | ECI | MPSIUe | UAS | SBNS | octet 8* |
| Reserved | Reserved | Reserved | | Reserved | SUPLS | LUS | A2XNPC 5 | A2XEPC5 | octet 9* |
| 0 | 0 | 0 | | 0 | 0 | 0 | 0 | 0 | octet 10*-15* |
| Reserved | | | | | | | | | |

**Table 2**

| | | |
|---|---|---|
| LCS-UPP support (LUS) (octet 9, bit 3) | | |
| This bit indicates the capability to support LCS-UPP protocol. | | |
| Bit | | |
| | 3 | |
| | 0 | LUS not supported (not supported) |
| | 1 | LUS supported (supported) |
| SUPL support (SUPLS) (octet 9, bit 4) | | |
| This bit indicates the capability to support SUPL functionality. | | |
| Bit | | |
| | 4 | |
| | 0 | SUPLS not supported |
| | 1 | SUPLS supported |

"This bit indicates the capability to support LCS-UPP protocol" means that this bit indicates the capability to support the LCS-UPP protocol. "This bit indicates the capability to support SUPL functionality" means that this bit indicates the capability to support the SUPL functionality.

For example, the specific meanings of the LCS-UPP support (LUS) field and the SUPL support (SUPLS) field may alternatively be different from those described in Table 2. For example, a value 1 for the LCS-UPP support field indicates that the terminal device does not support using LCS-UPP to transmit user-plane positioning information, and a value 0 for the LCS-UPP support field indicates that the terminal device supports using LCS-UPP to transmit user-plane positioning information; a value 1 for the SUPL support field indicates that the terminal device does not support using SUPL to transmit user-plane positioning information, and a value 0 for the SUPL support field indicates that the terminal device supports using SUPL to transmit user-plane positioning information.

In some embodiments, in a case that the first message includes the first specified protocol, assuming that the first transport protocol is SUPL and the second transport protocol is LCS-UPP, the terminal device may indicate the first specified protocol in the IE shown in Table 3. As shown in Table 3, the first specified protocol may occupy bit 1 and bit 2 in octet 1; where bit 1 is an LCS-UPP usage (LCS-UPP usage) field, and bit 2 is a SUPL usage (SUPL usage) field. Specifically, as shown in Table 4, a value 1 for the LCS-UPP usage field indicates that the terminal device expects to use LCS-UPP to transmit user-plane positioning information, and a value 0 for the LCS-UPP usage field indicates that the terminal device does not expect to use LCS-UPP to transmit user-plane positioning information; a value 1 for the SUPL usage field indicates that the terminal device expects to use SUPL to transmit user-plane positioning information, and a value 0 for the SUPL usage field indicates that the terminal device does not expect to use SUPL to transmit user-plane positioning information. It should be noted that the LCS-UPP usage field and the SUPL usage field may alternatively occupy other bits in octet 1, or the LCS-UPP usage field and the SUPL usage field may alternatively occupy other octets, which is not limited in the embodiments of this application.

**Table 3**

| 8 | 7 | 6 | 5 | 4 | 3 | 2 | 1 | |
|---|---|---|---|---|---|---|---|---|
| 5GS LCS-UP Protocol in use IEI (5GS LCS-UP Protocol in use IEI) | | | | Spare (spare) | spare | SUPL usage | LCS-UPP usage (usage) | octet 1 |

**Table 4**

| | | |
|---|---|---|
| LCS-UPP usage (octet 1, bit 1) | | |
| This bit indicates whether the LCS-UPP protocol is used for LCS-UP positioning | | |
| Bit | | |
| | 1 | |
| | 0 | LCS-UPP not used (not used) |
| | 1 | LCS-UPP used (used) |
| SUPL usage (octet 1, bit 2) | | |
| This bit indicates whether the SUPL protocol is used for LCS-UP positioning. | | |
| Bit | | |
| | 2 | |
| | 0 | SUPL not used |
| | 1 | SUPL used |

"This bit indicates whether the LCS-UPP protocol is used for LCS-UP positioning" means that this bit indicates whether the LCS-UPP protocol is used for LCS-UP positioning. "This bit indicates whether the SUPL protocol is used for LCS-UP positioning" means that this bit indicates whether the SUPL protocol is used for LCS-UP positioning.

In this embodiment of this application, the terminal device can provide, via the first message, the network side with information related to a transport protocol for transmitting user-plane positioning information, so that the terminal side and the network side can negotiate and determine a transport protocol to be used for transmitting user-plane positioning information, thereby improving transmission efficiency of user-plane positioning information.

In some embodiments, the positioning negotiation method 200 further includes:
receiving, by the terminal device, a second message from the first core network device, where the second message is used for network registration or establishing a user-plane positioning connection.

The second message includes one or more of the following: a second capability, a second specified protocol, and a second cause value.

The second capability is used to indicate a transport protocol supported by a network for transmitting user-plane positioning information, the second specified protocol includes a transport protocol specified by the first core network device or the second core network device for transmitting user-plane positioning information, and the second cause value is used to indicate a reason why the network rejects a user-plane positioning connection establishment request initiated by the terminal device.

In some embodiments, in a case that the second message is used for network registration, the second message includes the second capability. For example, the first message is a registration request (registration request) message and the second message is a registration accept (registration accept) message. Specifically, the terminal device provides the first capability in a registration request message, and the first core network device (such as an AMF entity) stores the first capability as terminal context (UE context) information. The first core network device sends a registration accept message to the terminal device, aiming at informing the terminal device of a registration result and/or data of a control plane N1 connection, and the first core network device includes the second capability (that is, the transport protocol supported by the network for transmitting user-plane positioning information) in the registration accept message.

Specifically, for example, in a case that bit information carried in the registration request message by the terminal device indicates that the terminal device supports user-plane positioning, the first core network device includes the second capability (that is, the transport protocol supported by the network for transmitting user-plane positioning information) in the registration accept message.

In some embodiments, in a case that the second message is used to establish a user-plane positioning connection, the second message includes one or more of the following: the second capability, the second specified protocol, and the second cause value.

In some embodiments, in a case that the second message is used for establishing a user-plane positioning connection, the second message may be a downlink non-access stratum (Non-Access Stratum, NAS) transmission message, for example, the second message is a user-plane positioning request message sent by the first core network device (such as an AMF entity). In this case, the second message may include the second capability and/or the second specified protocol, for example, the second capability and/or the second specified protocol may be carried by a payload container (payload container) information element (information element, IE) or other IEs. In this case, it can be understood that the network (such as an LMF entity) initiates or triggers the user-plane positioning procedure.

In some embodiments, in a case that the second message is used for establishing a user-plane positioning connection, the second message may be a downlink NAS transport message, for example, the second message is a user-plane positioning response message or user-plane positioning reply message sent by the first core network device (such as the AMF entity). In this case, the second message may include the second cause value, and optionally, the second message may further include the second capability and/or the second specified protocol. For example, the second cause value, the second capability, the second specified protocol, and the like may be carried by the payload container IE or other IEs. In this case, it can be understood that the terminal device initiates or triggers the user-plane positioning procedure.

In some embodiments, in a case that the first message includes the first capability, the second message is received by the terminal device after the first message is sent, and the second message includes the second capability. For example, the first message is a registration request (registration request) message and the second message is a registration accept (registration accept) message. That is, the terminal device and the first core network device (such as the AMF entity) exchange their capabilities of transport protocols for transmitting user-plane positioning information during the network registration process.

In some embodiments, in a case that the first message includes the first specified protocol, the second message is received by the terminal device after the first message is sent, and the second message is used to indicate accepting a user-plane positioning connection establishment request initiated by the terminal device, and the second message carries the second specified protocol. For example, the first message is a user-plane positioning request message and the second message is a user-plane positioning response message or a user-plane positioning reply message.

Optionally, a transport protocol included in the second specified protocol is the same as a transport protocol included in the first specified protocol, or a transport protocol included in the second specified protocol is different from a transport protocol included in the first specified protocol.

In some embodiments, in a case that the first message includes the first specified protocol, the second message is received by the terminal device after the first message is sent, and the second message is used to indicate rejecting a user-plane positioning connection establishment request initiated by the terminal device, and the second message carries the second cause value. For example, the first message is a user-plane positioning request message and the second message is a user-plane positioning response message or a user-plane positioning reply message.

In some embodiments, in a case that the first message includes the first confirmation information, the second message is received by the terminal device before the first message is sent, and the second message carries the second specified protocol. For example, the second message is a user-plane positioning request message and the first message is a user-plane positioning response message or a user-plane positioning reply message.

In some embodiments, the second capability includes but is not limited to one of the following:
the network does not support a user-plane positioning capability;
the network supports using the first transport protocol to transmit user-plane positioning information;
the network supports using the second transport protocol to transmit user-plane positioning information; and
the network supports using the first transport protocol and the second transport protocol to transmit user-plane positioning information.

For example, that the network supports using the first transport protocol to transmit user-plane positioning information includes:
the network supports using the first transport protocol to transmit user-plane positioning information, and the network does not support using the second transport protocol to transmit user-plane positioning information; or
the network supports using the first transport protocol to transmit user-plane positioning information, and the network does not support using other transport protocols to transmit user-plane positioning information; or
the network supports using only the first transport protocol to transmit user-plane positioning information.

For example, that the network supports using the second transport protocol to transmit user-plane positioning information includes:
the network supports using the second transport protocol to transmit user-plane positioning information, and the network does not support using the first transport protocol to transmit user-plane positioning information; or
the network supports using the second transport protocol to transmit user-plane positioning information, and the network does not support using other transport protocols to transmit user-plane positioning information; or
the network supports using only the second transport protocol to transmit user-plane positioning information.

In some embodiments, the second capability, by indicating that the network supports the user-plane positioning capability, indicates that the network supports using the first transport protocol and/or the second transport protocol to transmit user-plane positioning information.

For example, in a case that the network supports the user-plane positioning capability, it is defaulted that the network supports using the first transport protocol to transmit user-plane positioning information.

For example, in a case that the network supports the user-plane positioning capability, it is defaulted that the network supports using the second transport protocol to transmit user-plane positioning information.

For another example, if the network supports the user-plane positioning capability, it is defaulted that the network supports using the first transport protocol and the second transport protocol to transmit user-plane positioning information.

In some embodiments, if at least one second core network device (such as an LMF entity) that supports using the first transport protocol to transmit user-plane positioning information is present in the network, it means that the network supports using the first transport protocol to transmit user-plane positioning information. If at least one second core network device (such as an LMF entity) that supports using the second transport protocol to transmit user-plane positioning information is present in the network, it means that the network supports using the second transport protocol to transmit user-plane positioning information. If at least one second core network device (such as an LMF entity) that not only supports using the first transport protocol to transmit user-plane positioning information but also supports using the second transport protocol to transmit user-plane positioning information is present in the network, it means that the network supports using the first transport protocol and the second transport protocol to transmit user-plane positioning information. If none of second core network devices (such as an LMF entity) in the network supports the user-plane positioning function, it means that the network does not support the user-plane positioning capability.

In some embodiments, the network may mandatorily support using the first transport protocol and the second transport protocol to transmit user-plane positioning information; or in a case that a plurality of second core network devices (such as LMF entities) are present in the network, some second core network devices support using the first transport protocol to transmit user-plane positioning information and some second core network devices support using the second transport protocol to transmit user-plane positioning information, the network supports using the first transport protocol and the second transport protocol to transmit user-plane positioning information.

In some embodiments, in a case that the network indicates supporting the user-plane positioning capability, and does not indicate the capability of the transport protocol supported by the network for transmitting user-plane positioning information, it can be understood that the network supports using the first transport protocol and the second transport protocol to transmit user-plane positioning information.

In some embodiments, the first core network device (such as an AMF entity) directly carries the second capability in the registration accept message without considering whether bit information carried by the terminal device in the registration request message indicates whether the terminal device supports the user-plane positioning capability.

In some embodiments, the second cause value includes at least one of the following: the first specified protocol is not supported, the first transport protocol is not supported, the second transport protocol is not supported, and the second core network device is congested.

In some embodiments, in a case that the second message carries the second cause value, the second message further includes network-supported transport protocol information for transmitting user-plane positioning information.

In some embodiments, the second specified protocol is determined by the first core network device (such as an AMF entity) or the second core network device (such as an LMF entity).

In some embodiments, in a case that the second message includes the second capability, the first core network device (such as an AMF entity) may indicate the second capability in a 5G System (5G System, 5GS) network feature support information element (information element, IE). Specifically, for example, it is assumed that the first transport protocol is SUPL, the second transport protocol is LCS-UPP, and the 5GS network feature support IEI is shown in Table 5. The second capability may occupy two bits (that is, bits 1 and 2) in octet 6* in the 5GS network feature support IEI, where the two bits in octet 6* are an LCS-UP protocol field. A specific meaning of the LCS-UP protocol field may be shown in Table 6. A value 00 of the LCS-UP protocol field represents that the network does not support the user-plane positioning capability (LCS user plane protocol not supported), a value 01 of the LCS-UP protocol field represents that the network supports using SUPL to transmit user-plane positioning information (SUPL protocol supported), a value 10 of the LCS-UP protocol field represents that the network supports using LCS-UPP to transmit user-plane positioning information (LCS-UPP protocol supported), and a value 11 of the LCS-UP protocol field represents that the network supports using SUPL and LCS-UPP to transmit user-plane positioning information (SUPL and LCS-UPP protocol supported). It should be noted that the LCS-UP protocol field may alternatively occupy other bits in the octet 6*, or the LCS-UP protocol field may occupy other octets, which is not limited in the embodiments of this application.

**Table 5**

| 8 | 7 | 6 | 5 | 4 | 3 | 2 | 1 | |
|---|---|---|---|---|---|---|---|---|
| 5GS network feature support IEI (5GS network feature support IEI) | | | | | | | | octet 1 |
| Length of 5GS network feature support contents (length of 5GS network feature support contents) | | | | | | | | octet 2 |
| MPSI | IWK N26 | EMF | | EMC | | IMS-VoPS-N3GPP | IMS-VoPS-3GPP | octet 3 |
| 5G-UP CIoT | 5G-IPHC-CP CIoT | N3 data | 5G-CP CIoT | RestrictEC | | MCSI | EMCN3 | octet 4* |
| UN-PER | PR | RPR | PIV | NCR | 5G-EHC-CP CIoT | ATS-IND | 5G-LCS | octet 5* |
| Spare (spare) | spare | spare | spare | Spare | spare | LCS-UP Protocol (protocol) | | Octet 6* |

**Table 6**

| | | |
|---|---|---|
| LCS user plane protocol (octet 6, bit 1 to 2) | | |
| This bit indicates the supported protocol to transfer location messages during LCS user plane positioning. | | |
| Bit | | |
| 2 | 1 | |
| 0 | 0 | LCS user plane protocol not supported (LCS user plane protocol not supported) |
| 0 | 1 | SUPL protocol supported (SUPL protocol supported) |
| 1 | 0 | LCS-UPP protocol supported (LCS-UPP protocol supported) |
| 1 | 1 | SUPL and LCS-UPP protocol supported (SUPL and LCS-UPP protocol supported) |

"LCS user plane protocol" indicates an LCS user plane protocol, and "This bit indicates the supported protocol to transfer location messages during LCS user plane positioning" means this bit indicates the supported protocol to transfer location messages during LCS user-plane positioning.

For example, the specific meaning of the LCS-UP protocol field may be different from that described in Table 6. For example, a value 00 for the LCS-UP protocol field indicates that the network supports using SUPL and LCS-UPP to transmit user-plane positioning information (SUPL and LCS-UPP protocol supported); a value 01 for the LCS-UP protocol field indicates that the network supports using SUPL to transmit user-plane positioning information (SUPL protocol supported); a value 10 for the LCS-UP protocol field indicates that the network supports using LCS-UPP to transmit user-plane positioning information (LCS-UPP protocol supported); and a value 11 for the LCS-UP protocol field indicates that the network does not support the user-plane positioning capability (LCS user plane protocol not supported)

In some embodiments, in a case that the second message includes the second capability, the second message further includes a user-plane positioning capability supported by the network. The network-supported user-plane positioning capability may occupy one bit of octet 6* in the 5GS network feature support IEI (that is, bit 3 in Table 7), as shown in Table 7, where bit 3 in octet 6* is an LCS-UP support field, and the specific meaning of the LCS-UP support field may be shown in Table 8. A value 0 for the LCS-UP support field indicates that the network does not support the user-plane positioning capability (LCS user plane protocol not supported), and a value 1 for the LCS-UP support field indicates that the network supports the user-plane positioning capability (LCS user plane protocol supported). It should be noted that the LCS-UP support field may alternatively occupy other bits in the octet 6*, or the LCS-UP support field may occupy other octets, which is not limited in the embodiments of this application.

**Table 7**

| 8 | 7 | 6 | 5 | 4 | 3 | 2 | 1 | |
|---|---|---|---|---|---|---|---|---|
| 5GS network feature support IEI (5GS network feature support IEI) | | | | | | | | octet 1 |
| Length of 5GS network feature support contents (length of 5GS network feature support contents) | | | | | | | | octet 2 |
| MPSI | IWK N26 | EMF | | EMC | | IMS-VoPS-N3GPP | IMS- VoPS-3GPP | octet 3 |
| 5G-UP CIoT | 5G-IPHC-CP CIoT | N3 data (data) | 5G-CP CIoT | RestrictEC | | MCSI | EMCN3 | octet 4* |
| UN-PER | PR | RPR | PIV | NCR | 5G-EHC-CP CIoT | ATS-IND | 5G-LCS | octet 5* |
| Spare (spare) | spare | spare | spare | spare | LCS-UP support (support) | spare | spare | Octet 6* |

**Table 8**

| | | |
|---|---|---|
| LCS-UP support (octet 6, bit 3) | | |
| This bit indicates the capability to support 5G location service via user plane positioning. | | |
| Bit | | |
| | 3 | |
| | 0 | LCS user plane not supported (LCS user plane not supported) |
| | 1 | LCS user plane supported (LCS user plane supported) |

"This bit indicates the capability to support 5G location service via user plane positioning" means that this bit indicates the capability to support 5G location service via user-plane positioning.

In some embodiments, in a case that the second message includes the second specified protocol, specified protocol information (that is, the second specified protocol) is transmitted to the terminal device via the second message in a terminal policy procedure, for example, a terminal policy (UE policy) or a policy (policy) dedicated to user-plane positioning. An implementation may be as follows: one new bit is occupied based on existing coding. For example, a value 1 indicates to specify using the SUPL protocol to transmit a user-plane positioning message, and a value 0 indicates to specify using the LCS-UPP protocol to transmit a user-plane positioning message. The reverse is also acceptable and this is not limited in the embodiments of this application.

In some embodiments, in a case that the second message includes the second specified protocol, assuming that the first transport protocol is SUPL and the second transport protocol is LCS-UPP, the first core network device may indicate the second specified protocol in the IE shown in Table 9. As shown in Table 9, the second specified protocol may occupy bit 1 and bit 2 in octet 1; where bit 1 is an LCS-UPP usage (LCS-UPP usage) field, and bit 2 is a SUPL usage (SUPL usage) field. Specifically, as shown in Table 10, a value 1 for the LCS-UPP usage field indicates that the terminal device expects to use LCS-UPP to transmit user-plane positioning information, and a value 0 for the LCS-UPP usage field indicates that the terminal device does not expect to use LCS-UPP to transmit user-plane positioning information; a value 1 for the SUPL usage field indicates that the terminal device expects to use SUPL to transmit user-plane positioning information, and a value 0 for the SUPL usage field indicates that the terminal device does not expect to use SUPL to transmit user-plane positioning information. It should be noted that the LCS-UPP usage field and the SUPL usage field may alternatively occupy other bits in octet 1, or the LCS-UPP usage field and the SUPL usage field may alternatively occupy other octets, which is not limited in the embodiments of this application.

**Table 9**

| 8 | 7 | 6 | 5 | 4 | 3 | 2 | 1 | |
|---|---|---|---|---|---|---|---|---|
| 5GS LCS-UP Protocol in use IEI | | | | spare | spare | SUPL usage | LCS-UPP usage | octet 1 |

**Table 10**

| | |
|---|---|
| LCS-UPP usage (octet 1, bit 1) | |
| This bit indicates whether the LCS-UPP protocol is used for LCS-UP positioning | |
| Bit | |
| 1 | |
| 0 | LCS-UPP not used (not used) |
| 1 | LCS-UPP used (used) |
| SUPL usage (octet 1, bit 2) | |
| This bit indicates whether the SUPL protocol is used for LCS-UP positioning. | |
| Bit | |
| 2 | |
| 0 | SUPL not used |
| 1 | SUPL used |

"This bit indicates whether the LCS-UPP protocol is used for LCS-UP positioning" means that this bit indicates whether the LCS-UPP protocol is used for LCS-UP positioning. "This bit indicates whether the SUPL protocol is used for LCS-UP positioning" means that this bit indicates whether the SUPL protocol is used for LCS-UP positioning.

In this embodiment of this application, the first core network device can provide, via the second message, the terminal device with information related to a transport protocol for transmitting user-plane positioning information, so that the terminal side and the network side can negotiate and determine a transport protocol to be used for transmitting user-plane positioning information, thereby improving transmission efficiency of user-plane positioning information.

Therefore, in this embodiment of this application, the terminal side and the network side exchange information related to a transport protocol for transmitting the user-plane positioning information, so that the terminal side and the network side can negotiate and determine a transport protocol to be used for transmitting user-plane positioning information, thereby improving transmission efficiency of user-plane positioning information.

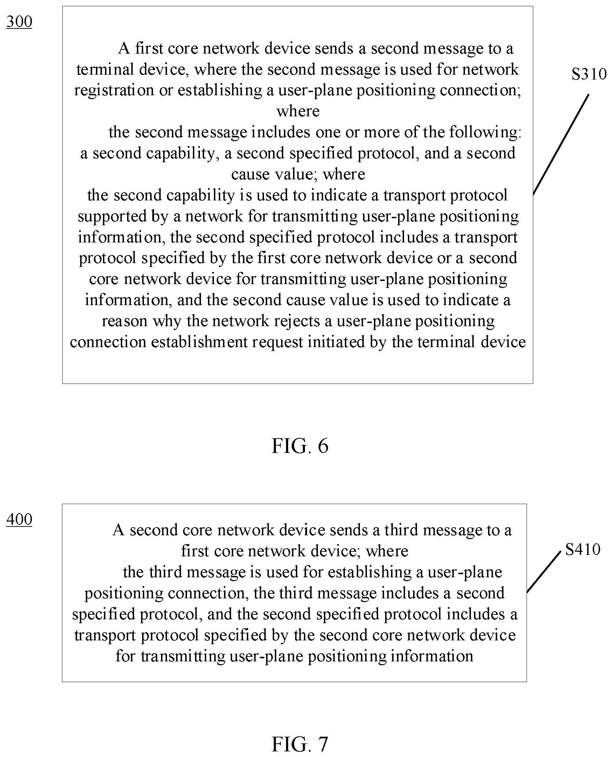

The foregoing describes in detail the terminal device side embodiment of this application with reference to FIG. 5, and the following describes in detail the first core network device side embodiment of this application with reference to FIG. 6. It should be understood that the first core network device side embodiment and the terminal device side embodiment correspond to each other. For similar descriptions, reference may be made to the terminal device side embodiment.

FIG. 6 is a schematic flowchart of a positioning negotiation method 300 according to an embodiment of this application. As shown in FIG. 6, the positioning negotiation method 300 may include at least part of the following contents:

S310: A first core network device sends a second message to a terminal device, where the second message is used for network registration or establishing a user-plane positioning connection.

The second message includes one or more of the following: a second capability, a second specified protocol, and a second cause value.

The second capability is used to indicate a transport protocol supported by a network for transmitting user-plane positioning information, the second specified protocol includes a transport protocol specified by the first core network device or a second core network device for transmitting user-plane positioning information, and the second cause value is used to indicate a reason why the network rejects a user-plane positioning connection establishment request initiated by the terminal device.

It should be understood that FIG. 6 illustrates steps or operations of the positioning negotiation method 300, but these steps or operations are only examples. Other operations or variations to the operations in FIG. 6 may also be performed in the embodiments of this application.

The transport protocol for transmitting user-plane positioning information described in the embodiments of this application may also be referred to as a protocol stack for transmitting user-plane positioning information or a user-plane protocol stack, which is not limited in the embodiments of this application.

It should be noted that the embodiments of this application take two transport protocols for transmitting user-plane positioning information (that is, a first transport protocol and a second transport protocol) as an example for illustration. Certainly, the embodiments of this application are also applicable to more (for example, 3, 4, or 5) transport protocols for transmitting user-plane positioning information. For details, reference may be made to the related description in the embodiments of this application. For brevity, details are not described herein again.

In some embodiments, the first transport protocol is a user-plane location transport protocol not defined by 3GPP, and the second transport protocol is a user-plane location transport protocol defined by 3GPP.

In some embodiments, the first transport protocol is secure user plane location (SUPL). Certainly, the first transport protocol may also be any other user-plane location transport protocol not defined by 3GPP.

In some embodiments, the second transport protocol is location service user plane protocol (LCS-UPP). Certainly, the second transport protocol may also be any other user-plane location transport protocol defined by 3GPP.

In the embodiments of this application, the user-plane positioning procedure may be initiated or triggered by the terminal device or by the network side (for example, the second core network device).

In some embodiments, the first core network device may be a core network device, for example, an AMF entity. Certainly, the first core network device may also be any other core network device, which is not limited in the embodiments of this application.

In some embodiments, the second core network device is a device that establishes a user-plane positioning connection with the terminal device, for example, the second core network device is an LMF entity. Certainly, the second core network device may also be any other core network device, which is not limited in the embodiments of this application.

In some embodiments, the second core network device may alternatively be replaced by a third-party device (such as a location service (LCS) client (client)) or a 5GC NF entity (such as an NWDAF).

In some embodiments, in a case that the second message is used for network registration, the second message includes the second capability. For example, the second message may be a registration accept (registration accept) message. Specifically, the terminal device provides the first capability in the registration request (registration request) message, where the first capability is used to indicate a transport protocol supported by the terminal device for transmitting user-plane positioning information, and the first core network device (such as an AMF entity) stores the first capability as terminal context information (UE context). The first core network device sends a registration accept message to the terminal device, aiming at informing the terminal device of a registration result and/or data of a control plane N1 connection, and the first core network device includes the second capability (that is, the transport protocol supported by the network for transmitting user-plane positioning information) in the registration accept message.

Specifically, for example, in a case that bit information carried in the registration request message by the terminal device indicates that the terminal device supports user-plane positioning, the first core network device includes the second capability (that is, the transport protocol supported by the network for transmitting user-plane positioning information) in the registration accept message.

In some embodiments, in a case that the second message is used to establish a user-plane positioning connection, the second message includes one or more of the following: the second capability, the second specified protocol, and the second cause value.

In some embodiments, in a case that the second message is used for establishing a user-plane positioning connection, the second message may be a user-plane positioning request message sent by the first core network device (such as an AMF entity). In this case, the second message may include the second capability and/or the second specified protocol. In this case, it can be understood that the network (such as an LMF entity) initiates or triggers the user-plane positioning procedure.

In some embodiments, in a case that the second message is used for establishing a user-plane positioning connection, the second message may be a user-plane positioning response message or a user-plane positioning reply message sent by the first core network device (such as an AMF entity). In this case, the second message may include the second cause value, and optionally, the second message may further include the second capability and/or the second specified protocol. In this case, it can be understood that the terminal device initiates or triggers the user-plane positioning procedure.

In some embodiments, the second capability includes but is not limited to one of the following:
the network does not support a user-plane positioning capability;
the network supports using the first transport protocol to transmit user-plane positioning information;
the network supports using the second transport protocol to transmit user-plane positioning information; and
the network supports using the first transport protocol and the second transport protocol to transmit user-plane positioning information.

For example, that the network supports using the first transport protocol to transmit user-plane positioning information includes:
the network supports using the first transport protocol to transmit user-plane positioning information, and the network does not support using the second transport protocol to transmit user-plane positioning information; or
the network supports using the first transport protocol to transmit user-plane positioning information, and the network does not support using other transport protocols to transmit user-plane positioning information; or
the network supports using only the first transport protocol to transmit user-plane positioning information.

For example, that the network supports using the second transport protocol to transmit user-plane positioning information includes:
the network supports using the second transport protocol to transmit user-plane positioning information, and the network does not support using the first transport protocol to transmit user-plane positioning information; or
the network supports using the second transport protocol to transmit user-plane positioning information, and the network does not support using other transport protocols to transmit user-plane positioning information; or
the network supports using only the second transport protocol to transmit user-plane positioning information.

In some embodiments, the second capability, by indicating that the network supports the user-plane positioning capability, indicates that the network supports using the first transport protocol and/or the second transport protocol to transmit user-plane positioning information.

For example, in a case that the network supports the user-plane positioning capability, it is defaulted that the network supports using the first transport protocol to transmit user-plane positioning information.

For example, in a case that the network supports the user-plane positioning capability, it is defaulted that the network supports using the second transport protocol to transmit user-plane positioning information.

For another example, if the network supports the user-plane positioning capability, it is defaulted that the network supports using the first transport protocol and the second transport protocol to transmit user-plane positioning information.

In some embodiments, if at least one second core network device (such as an LMF entity) that supports using the first transport protocol to transmit user-plane positioning information is present in the network, it means that the network supports using the first transport protocol to transmit user-plane positioning information. If at least one second core network device (such as an LMF entity) that supports using the second transport protocol to transmit user-plane positioning information is present in the network, it means that the network supports using the second transport protocol to transmit user-plane positioning information. If at least one second core network device (such as an LMF entity) that not only supports using the first transport protocol to transmit user-plane positioning information but also supports using the second transport protocol to transmit user-plane positioning information is present in the network, it means that the network supports using the first transport protocol and the second transport protocol to transmit user-plane positioning information. If none of second core network devices (such as an LMF entity) in the network supports the user-plane positioning function, it means that the network does not support the user-plane positioning capability.

In some embodiments, the network may mandatorily support using the first transport protocol and the second transport protocol to transmit user-plane positioning information; or in a case that a plurality of second core network devices (such as LMF entities) are present in the network, some second core network devices support using the first transport protocol to transmit user-plane positioning information and some second core network devices support using the second transport protocol to transmit user-plane positioning information, the network supports using the first transport protocol and the second transport protocol to transmit user-plane positioning information.

In some embodiments, in a case that the network indicates supporting the user-plane positioning capability, and does not indicate the capability of the transport protocol supported by the network for transmitting user-plane positioning information, it can be understood that the network supports using the first transport protocol and the second transport protocol to transmit user-plane positioning information.

In some embodiments, the first core network device (such as an AMF entity) directly carries the second capability in the registration accept message without considering whether bit information carried by the terminal device in the registration request message indicates whether the terminal device supports the user-plane positioning capability.

In some embodiments, the second cause value includes at least one of the following: the first specified protocol is not supported, the first transport protocol is not supported, the second transport protocol is not supported, and the second core network device is congested.

In some embodiments, in a case that the second message carries the second cause value, the second message further includes network-supported transport protocol information for transmitting user-plane positioning information.

In some embodiments, the second specified protocol includes but is not limited to one of the following:
a first transport protocol, a second transport protocol, the first transport protocol or the second transport protocol, and the first transport protocol and the second transport protocol.

For example, in a case that the second specified protocol includes the first transport protocol and the second transport protocol, one implementation is to use the first transport protocol to transmit an LPP message and use the second transport protocol to transmit a location service supplementary service (LCS-SS) message.

In some embodiments, the second specified protocol is determined by the first core network device (such as an AMF entity) or the second core network device (such as an LMF entity).

In some embodiments, in a case that the second message includes the second capability, the first core network device (such as an AMF entity) may indicate the second capability in a 5GS network feature support IE. Specifically, for example, it is assumed that the first transport protocol is SUPL, the second transport protocol is LCS-UPP, and the 5GS network feature support IEI is shown in Table 5. The second capability may occupy two bits (that is, bits 1 and 2) in octet 6* in the 5GS network feature support IEI, where the two bits in octet 6* are an LCS-UP protocol field. A specific meaning of the LCS-UP protocol field may be shown in Table 6. A value 00 of the LCS-UP protocol field represents that the network does not support the user-plane positioning capability (LCS user plane protocol not supported), a value 01 of the LCS-UP protocol field represents that the network supports using SUPL to transmit user-plane positioning information (SUPL protocol supported), a value 10 of the LCS-UP protocol field represents that the network supports using LCS-UPP to transmit user-plane positioning information (LCS-UPP protocol supported), and a value 11 of the LCS-UP protocol field represents that the network supports using SUPL and LCS-UPP to transmit user-plane positioning information (SUPL and LCS-UPP protocol supported). It should be noted that the LCS-UP protocol field may alternatively occupy other bits in the octet 6*, or the LCS-UP protocol field may occupy other octets, which is not limited in the embodiments of this application.

For example, the specific meaning of the LCS-UP protocol field may be different from that described in Table 6. For example, a value of 00 for the LCS-UP protocol field indicates that the network supports using SUPL and LCS-UPP to transmit user-plane positioning information (SUPL and LCS-UPP protocol supported); a value of 01 for the LCS-UP protocol field indicates that the network supports using SUPL to transmit user-plane positioning information (SUPL protocol supported); a value of 10 for the LCS-UP protocol field indicates that the network supports using LCS-UPP to transmit user-plane positioning information (LCS-UPP protocol supported); and a value of 11 for the LCS-UP protocol field indicates that the network does not support the user-plane positioning capability (LCS user plane protocol not supported)

In some embodiments, in a case that the second message includes the second capability, the second message further includes a user-plane positioning capability supported by the network. The network-supported user-plane positioning capability may occupy one bit of octet 6* in the 5GS network feature support IEI (that is, bit 3 in Table 7), as shown in Table 7, where bit 3 in octet 6* is an LCS-UP support field, and the specific meaning of the LCS-UP support field may be shown in Table 8. A value 0 for the LCS-UP support field indicates that the network does not support the user-plane positioning capability (LCS user plane protocol not supported), and a value 1 for the LCS-UP support field indicates that the network supports the user-plane positioning capability (LCS user plane protocol supported). It should be noted that the LCS-UP support field may alternatively occupy other bits in the octet 6*, or the LCS-UP support field may occupy other octets, which is not limited in the embodiments of this application.

In some embodiments, in a case that the second message includes the second specified protocol, specified protocol information (that is, the second specified protocol) is transmitted to the terminal device via the second message in a terminal policy procedure, for example, a terminal policy (UE policy) or a policy (policy) dedicated to user-plane positioning. An implementation may be as follows: one new bit is occupied based on existing coding. For example, a value 1 indicates to specify using the SUPL protocol to transmit a user-plane positioning message, and a value 0 indicates to specify using the LCS-UPP protocol to transmit a user-plane positioning message. The reverse is also acceptable and this is not limited in the embodiments of this application.

In some embodiments, in a case that the second message includes the second specified protocol, assuming that the first transport protocol is SUPL and the second transport protocol is LCS-UPP, the first core network device may indicate the second specified protocol in the IE shown in Table 9. As shown in Table 9, the second specified protocol may occupy bit 1 and bit 2 in octet 1; where bit 1 is an LCS-UPP usage (LCS-UPP usage) field, and bit 2 is a SUPL usage (SUPL usage) field. Specifically, as shown in Table 10, a value 1 for the LCS-UPP usage field indicates that the terminal device expects to use LCS-UPP to transmit user-plane positioning information, and a value 0 for the LCS-UPP usage field indicates that the terminal device does not expect to use LCS-UPP to transmit user-plane positioning information; a value 1 for the SUPL usage field indicates that the terminal device expects to use SUPL to transmit user-plane positioning information, and a value 0 for the SUPL usage field indicates that the terminal device does not expect to use SUPL to transmit user-plane positioning information. It should be noted that the LCS-UPP usage field and the SUPL usage field may alternatively occupy other bits in octet 1, or the LCS-UPP usage field and the SUPL usage field may alternatively occupy other octets, which is not limited in the embodiments of this application.

In some embodiments, the positioning negotiation method 300 further includes:
receiving, by the first core network device, a first message from the terminal device, where the first message is used for network registration or establishing a user-plane positioning connection.

The first message includes one or more of the following: a first capability, a first specified protocol, and first confirmation information; and
the first capability is used to indicate a transport protocol supported by the terminal device for transmitting user-plane positioning information; the first specified protocol includes a transport protocol that the terminal device expects to use for transmitting user-plane positioning information; and the first confirmation information is used to indicate whether the terminal device accepts or rejects using the second specified protocol to transmit user-plane positioning information.

In some embodiments, in a case that the first message is used for performing network registration, the first message includes the first capability. For example, the first message may be a registration request (registration request) message. Specifically, the terminal device sends a registration request message to the first core network device (for example, the AMF entity) to provide registration information and perform network registration, and the terminal device provides the first capability (that is, the transport protocol supported by the terminal device for transmitting user-plane positioning information) in the registration request message.

Specifically, for example, in a case that bit information carried in the registration request message by the terminal device indicates that the terminal device supports user-plane positioning, the terminal device provides the first capability (that is, the transport protocol supported by the terminal device for transmitting user-plane positioning information) in the registration request message.

In some embodiments, in a case that the first message is used for establishing a user-plane positioning connection, the first message includes, but is not limited to, one or more of the following: the first capability, the first specified protocol, and the first confirmation information.

In some embodiments, in a case that the first message is used for establishing a user-plane positioning connection, the first message may be a user-plane positioning request message sent by the terminal device. In this case, the first message may include the first capability and/or the first specified protocol. In this case, it can be understood that the terminal device initiates or triggers the user-plane positioning procedure.

In some embodiments, in a case that the first message is used for establishing a user-plane positioning connection, the first message may be a user-plane positioning response message or a user-plane positioning reply message sent by the terminal device. In this case, the first message may include the first confirmation information, and optionally, the first message may further include the first capability and/or the first specified protocol. In this case, it can be understood that the network side (such as the LMF entity) initiates or triggers the user-plane positioning procedure.

In some embodiments, in a case that the first message includes the first capability, the second message is received by the terminal device after the first message is sent, and the second message includes the second capability. For example, the first message is a registration request (registration request) message and the second message is a registration accept (registration accept) message. That is, the terminal device and the first core network device (such as the AMF entity) exchange their capabilities of transport protocols for transmitting user-plane positioning information during the network registration process.

In some embodiments, in a case that the first message includes the first specified protocol, the second message is received by the terminal device after the first message is sent, and the second message is used to indicate accepting a user-plane positioning connection establishment request initiated by the terminal device, and the second message carries the second specified protocol. For example, the first message is a user-plane positioning request message and the second message is a user-plane positioning response message or a user-plane positioning reply message.

Optionally, a transport protocol included in the second specified protocol is the same as a transport protocol included in the first specified protocol, or a transport protocol included in the second specified protocol is different from a transport protocol included in the first specified protocol.

In some embodiments, in a case that the first message includes the first specified protocol, the second message is received by the terminal device after the first message is sent, and the second message is used to indicate rejecting a user-plane positioning connection establishment request initiated by the terminal device, and the second message carries the second cause value. For example, the first message is a user-plane positioning request message and the second message is a user-plane positioning response message or a user-plane positioning reply message.

In some embodiments, in a case that the first message includes the first confirmation information, the second message is received by the terminal device before the first message is sent, and the second message carries the second specified protocol. For example, the second message is a user-plane positioning request message and the first message is a user-plane positioning response message or a user-plane positioning reply message.

In some embodiments, the first capability includes but is not limited to one of the following:
the terminal device supports using the first transport protocol to transmit user-plane positioning information;
the terminal device supports using the second transport protocol to transmit user-plane positioning information; and
the terminal device supports using the first transport protocol and the second transport protocol to transmit user-plane positioning information.

For example, that the terminal device supports using the first transport protocol to transmit user-plane positioning information includes:
the terminal device supports using the first transport protocol to transmit user-plane positioning information, and the terminal device does not support using the second transport protocol to transmit user-plane positioning information; or
the terminal device supports using the first transport protocol to transmit user-plane positioning information, and the terminal device does not support using other transport protocols to transmit user-plane positioning information; or
the terminal device supports using only the first transport protocol to transmit user-plane positioning information.

For example, that the terminal device supports using the second transport protocol to transmit user-plane positioning information includes:
the terminal device supports using the second transport protocol to transmit user-plane positioning information, and the terminal device does not support using the first transport protocol to transmit user-plane positioning information; or
the terminal device supports using the second transport protocol to transmit user-plane positioning information, and the terminal device does not support using other transport protocols to transmit user-plane positioning information; or
the terminal device supports using only the second transport protocol to transmit user-plane positioning information.

In some embodiments, by indicating that the terminal device supports the user-plane positioning capability, the first capability may indicate that the terminal device supports using the first transport protocol and/or the second transport protocol to transmit user-plane positioning information. That is, in a case that the terminal device supports the user-plane positioning capability, it is defaulted that the terminal device supports using the first transport protocol and/or the second transport protocol to transmit user-plane positioning information.

For example, in a case that the terminal device supports the user-plane positioning capability, it is defaulted that the terminal device supports using the first transport protocol to transmit user-plane positioning information.

For another example, in a case that the terminal device supports the user-plane positioning capability, it is defaulted that the terminal device supports using the second transport protocol to transmit user-plane positioning information.

For still another example, in a case that the terminal device supports the user-plane positioning capability, it is defaulted that the terminal device supports using the first transport protocol and the second transport protocol to transmit user-plane positioning information.

In some embodiments, the first specified protocol includes, but is not limited to, one of the following: a first transport protocol, a second transport protocol, the first transport protocol or the second transport protocol, and the first transport protocol and the second transport protocol.

For example, in a case that the first message includes the first capability and does not include the first specified protocol, if the first capability includes that the terminal device supports using the first transport protocol and the second transport protocol to transmit user-plane positioning information, it is defaulted that the terminal device expects to use the first transport protocol and/or the second transport protocol to transmit user-plane positioning information.

For example, in a case that the first specified protocol includes the first transport protocol and the second transport protocol, one implementation is to use the first transport protocol to transmit an LPP message and use the second transport protocol to transmit a location service supplementary service (LCS-SS) message.

In some embodiments, in a case that the first message includes the first confirmation information, and the first confirmation information indicates that the terminal device rejects using the second specified protocol to transmit the user-plane positioning information, the first message further includes a first cause value, where the first cause value is used to indicate a reason why the terminal device rejects a user-plane positioning connection establishment request initiated by a network.

In some embodiments, the first cause value includes but is not limited to one of the following: the second specified protocol is not supported, the first transport protocol is not supported, and the second transport protocol is not supported.

In some embodiments, in a case that the first message includes the first cause value, the first message further includes a transport protocol supported by the terminal device for transmitting user-plane positioning information.

Specifically, for example, the first cause value includes that the second specified protocol is not supported. Assuming that the second specified protocol includes the first transport protocol, in this case, the first message further includes that the terminal device supports using the second transport protocol to transmit user-plane positioning information.

Specifically, for example, the first cause value includes that the second specified protocol is not supported. Assuming that the second specified protocol includes the second transport protocol, in this case, the first message further includes that the terminal device supports using the first transport protocol to transmit user-plane positioning information.

Specifically, for example, the first cause value includes that the first transport protocol is not supported; in this case, the first message further includes that the terminal device supports using the second transport protocol to transmit user-plane positioning information.

Specifically, for example, the first cause value includes that the second transport protocol is not supported; in this case, the first message further includes that the terminal device supports using the first transport protocol to transmit user-plane positioning information.

In some embodiments, in a case that the first message includes the first capability, the terminal device may indicate the first capability in a 5GMM capability (capability). For example, assuming that the first transport protocol is SUPL and the second transport protocol is LCS-UPP, the 5GMM capability IEI may be shown in Table 1. The first capability may occupy bits 3 and 4 in octet (octet) 9* in the 5GMM capability IEI, where bit 3 in octet 9* is an LCS-UPP support (LUS) field, and bit 4 in octet 9* is a SUPL support (SUPLS) field. Specifically, as shown in Table 2, a value 0 in the LCS-UPP support field indicates that the terminal device does not support using LCS-UPP to transmit user-plane positioning information, and a value 1 in the LCS-UPP support field indicates that the terminal device supports using LCS-UPP to transmit user-plane positioning information; a value 0 in the SUPL support field indicates that the terminal device does not support using SUPL to transmit user-plane positioning information, and a value 1 in the SUPL support field indicates that the terminal device supports using SUPL to transmit user-plane positioning information. It should be noted that the LCS-UPP support (LUS) field and SUPL support (SUPLS) field may alternatively occupy other bits in octet 9*, or the LCS-UPP support (LUS) field and SUPL support (SUPLS) field may alternatively occupy other octets, which is not limited in the embodiments of this application.

For example, the specific meanings of the LCS-UPP support field and the SUPL support field may alternatively be different from those described in Table 2. For example, a value 1 for the LCS-UPP support field indicates that the terminal device does not support using LCS-UPP to transmit user-plane positioning information, and a value 0 for the LCS-UPP support field indicates that the terminal device supports using LCS-UPP to transmit user-plane positioning information; a value 1 for the SUPL support field indicates that the terminal device does not support using SUPL to transmit user-plane positioning information, and a value 0 for the SUPL support field indicates that the terminal device supports using SUPL to transmit user-plane positioning information.

In some embodiments, the terminal device may send the registration request message carrying the first capability in an initial registration and periodic update procedure.

In some embodiments, in a case that the first message includes the first specified protocol, assuming that the first transport protocol is SUPL and the second transport protocol is LCS-UPP, the terminal device may indicate the first specified protocol in the IE shown in Table 3. As shown in Table 3, the first specified protocol may occupy bit 1 and bit 2 in octet 1; where bit 1 is an LCS-UPP usage (LCS-UPP usage) field, and bit 2 is a SUPL usage (SUPL usage) field. Specifically, as shown in Table 4, a value 1 for the LCS-UPP usage field indicates that the terminal device expects to use LCS-UPP to transmit user-plane positioning information, and a value 0 for the LCS-UPP usage field indicates that the terminal device does not expect to use LCS-UPP to transmit user-plane positioning information; a value 1 for the SUPL usage field indicates that the terminal device expects to use SUPL to transmit user-plane positioning information, and a value 0 for the SUPL usage field indicates that the terminal device does not expect to use SUPL to transmit user-plane positioning information. It should be noted that the LCS-UPP usage field and the SUPL usage field may alternatively occupy other bits in octet 1, or the LCS-UPP usage field and the SUPL usage field may alternatively occupy other octets, which is not limited in the embodiments of this application.

In some embodiments, the positioning negotiation method 300 further includes:
based on the first capability and/or the first specified protocol, and a transport protocol supported by at least one second core network device for transmitting user-plane positioning information, selecting, by the first core network device, a second core network device from the at least one second core network device to establish a user-plane positioning connection with the terminal device; and/or
determining, by the first core network device, the second specified protocol based on the first capability and/or the first specified protocol and a transport protocol supported by at least one second core network device for transmitting user-plane positioning information.

In some embodiments, the first core network device may separately obtain and store a transport protocol supported by each of the at least one second core network device for transmitting user-plane positioning information through local configuration or by querying a network repository function (Network Repository Function, NRF) entity, so that the first core network device can provide the second capability to inform the terminal device of protocol information supported by the network.

In some embodiments, the transport protocol supported by the second core network device for transmitting user-plane positioning information includes one of the following: the second core network device does not support the user-plane positioning capability, the second core network device supports using the first transport protocol to transmit user-plane positioning information, the second core network device supports using the second transport protocol to transmit user-plane positioning information, and the second core network device supports using the first transport protocol and the second transport protocol to transmit user-plane positioning information.

It should be noted that different second core network devices can support the same or different transport protocols for transmitting user-plane positioning information.

For example, the first capability includes that the terminal device supports using the first transport protocol to transmit user-plane positioning information. In this case, the first core network device selects one second core network device that supports using the first transport protocol to transmit user-plane positioning information from the at least one second core network device and establishes a user-plane positioning connection with the terminal device.

For another example, the first capability includes that the terminal device supports using the second transport protocol to transmit user-plane positioning information. In this case, the first core network device selects one second core network device that supports using the second transport protocol to transmit user-plane positioning information from the at least one second core network device and establishes a user-plane positioning connection with the terminal device.

For still another example, the first capability includes that the terminal device supports using the first transport protocol and the second transport protocol to transmit user-plane positioning information. In this case, the first core network device selects one second core network device that supports using the first transport protocol and/or the second transport protocol to transmit user-plane positioning information from the at least one second core network device and establishes a user-plane positioning connection with the terminal device.

For example, the first specified protocol includes the first transport protocol. In this case, the first core network device may preferentially select one second core network device that supports using the first transport protocol to transmit user-plane positioning information from the at least one second core network device and establishes a user-plane positioning connection with the terminal device. Certainly, if the first specified protocol includes the first transport protocol, the first core network device may alternatively select one second core network device that supports using the second transport protocol to transmit user-plane positioning information from the at least one second core network device, and establish a user-plane positioning connection with the terminal device, or the first core network device may alternatively select one second core network device that supports using the first transport protocol and the second transport protocol to transmit user-plane positioning information from the at least one second core network device and establishes a user-plane positioning connection with the terminal device.

For another example, the first specified protocol includes the second transport protocol. In this case, the first core network device may preferentially select one second core network device that supports using the second transport protocol to transmit user-plane positioning information from the at least one second core network device and establishes a user-plane positioning connection with the terminal device. Certainly, if the first specified protocol includes the second transport protocol, the first core network device may alternatively select one second core network device that supports using the first transport protocol to transmit user-plane positioning information from the at least one second core network device, and establish a user-plane positioning connection with the terminal device, or the first core network device may alternatively select one second core network device that supports using the first transport protocol and the second transport protocol to transmit user-plane positioning information from the at least one second core network device and establishes a user-plane positioning connection with the terminal device.

For another example, the first specified protocol includes the first transport protocol or the second transport protocol. In this case, the first core network device may select one second core network device that supports using the first transport protocol or the second transport protocol to transmit user-plane positioning information from the at least one second core network device and establishes a user-plane positioning connection with the terminal device. Certainly, in a case that the first specified protocol includes the first transport protocol or the second transport protocol, the first core network device may alternatively select one second core network device that supports using the first transport protocol and the second transport protocol to transmit user-plane positioning information from the at least one second core network device and establishes a user-plane positioning connection with the terminal device.

For still another example, the first specified protocol includes the first transport protocol and the second transport protocol. In this case, the first core network device may select one second core network device that supports using the first transport protocol and/or the second transport protocol to transmit user-plane positioning information from the at least one second core network device and establishes a user-plane positioning connection with the terminal device.

For example, the first capability includes that the terminal device supports using the first transport protocol to transmit user-plane positioning information, and the first specified protocol includes the first transport protocol. In this case, the first core network device selects one second core network device that supports using the first transport protocol to transmit user-plane positioning information from the at least one second core network device and establishes a user-plane positioning connection with the terminal device.

For another example, the first capability includes that the terminal device supports using the first transport protocol and the second transport protocol to transmit user-plane positioning information, and the first specified protocol includes the first transport protocol. In this case, the first core network device may preferentially select one second core network device that supports using the first transport protocol to transmit user-plane positioning information from the at least one second core network device and establishes a user-plane positioning connection with the terminal device. Certainly, the first core network device may alternatively select one second core network device that supports using the second transport protocol to transmit user-plane positioning information from the at least one second core network device, and establish a user-plane positioning connection with the terminal device, or the first core network device may alternatively select one second core network device that supports using the first transport protocol and the second transport protocol to transmit user-plane positioning information from the at least one second core network device and establishes a user-plane positioning connection with the terminal device.

For another example, the first capability includes that the terminal device supports using the second transport protocol to transmit user-plane positioning information, and the first specified protocol includes the second transport protocol. In this case, the first core network device selects one second core network device that supports using the second transport protocol to transmit user-plane positioning information from the at least one second core network device and establishes a user-plane positioning connection with the terminal device.

For another example, the first capability includes that the terminal device supports using the first transport protocol and the second transport protocol to transmit user-plane positioning information, and the first specified protocol includes the second transport protocol. In this case, the first core network device may preferentially select one second core network device that supports using the second transport protocol to transmit user-plane positioning information from the at least one second core network device and establishes a user-plane positioning connection with the terminal device. Certainly, the first core network device may alternatively select one second core network device that supports using the first transport protocol to transmit user-plane positioning information from the at least one second core network device, and establish a user-plane positioning connection with the terminal device, or the first core network device may alternatively select one second core network device that supports using the first transport protocol and the second transport protocol to transmit user-plane positioning information from the at least one second core network device and establishes a user-plane positioning connection with the terminal device.

For another example, the first capability includes that the terminal device supports using the first transport protocol and the second transport protocol to transmit user-plane positioning information, and the first specified protocol includes the first transport protocol or the second transport protocol. In this case, the first core network device may select one second core network device that supports using the first transport protocol or the second transport protocol to transmit user-plane positioning information from the at least one second core network device and establishes a user-plane positioning connection with the terminal device. Certainly, the first core network device may alternatively select one second core network device that supports using the first transport protocol and the second transport protocol to transmit user-plane positioning information from the at least one second core network device and establishes a user-plane positioning connection with the terminal device.

For still another example, the first capability includes that the terminal device supports using the first transport protocol and the second transport protocol to transmit user-plane positioning information, and the first specified protocol includes the first transport protocol and the second transport protocol. In this case, the first core network device may select one second core network device that supports using the first transport protocol and/or the second transport protocol to transmit user-plane positioning information from the at least one second core network device and establishes a user-plane positioning connection with the terminal device.

For example, the first capability includes that the terminal device supports using the first transport protocol to transmit user-plane positioning information, and a second core network device that supports using the first transport protocol to transmit user-plane positioning information is present in the at least one second core network device, or a second core network device that supports using the first transport protocol and the second transport protocol to transmit user-plane positioning information is present in the at least one second core network device. In this case, the first core network device determines that the second specified protocol includes the first transport protocol.

For another example, the first capability includes that the terminal device supports using the first transport protocol to transmit user-plane positioning information, a second core network device that supports using the first transport protocol to transmit user-plane positioning information is absent in the at least one second core network device, and a second core network device that supports using the first transport protocol and the second transport protocol to transmit user-plane positioning information is either absent. In this case, the first core network device does not determine the second specified protocol, or the first core network device determines absence of the second specified protocol. Optionally, in this case, the first core network device may indicate rejecting a user-plane connection establishment request initiated by the terminal device or the second core network device.

For another example, the first capability includes that the terminal device supports using the second transport protocol to transmit user-plane positioning information, and a second core network device that supports using the second transport protocol to transmit user-plane positioning information is present in the at least one second core network device, or a second core network device that supports using the first transport protocol and the second transport protocol to transmit user-plane positioning information is present in the at least one second core network device. In this case, the first core network device determines that the second specified protocol includes the second transport protocol.

For another example, the first capability includes that the terminal device supports using the second transport protocol to transmit user-plane positioning information, a second core network device that supports using the second transport protocol to transmit user-plane positioning information is absent in the at least one second core network device, and a second core network device that supports using the first transport protocol and the second transport protocol to transmit user-plane positioning information is either absent. In this case, the first core network device does not determine the second specified protocol, or the first core network device determines absence of the second specified protocol. Optionally, in this case, the first core network device may indicate rejecting a user-plane connection establishment request initiated by the terminal device or the second core network device.

For another example, the first capability includes that the terminal device supports using the first transport protocol and the second transport protocol to transmit user-plane positioning information, and only a second core network device that supports using the first transport protocol to transmit user-plane positioning information is present in the at least one second core network device. In this case, the first core network device determines that the second specified protocol includes the first transport protocol.

For another example, the first capability includes that the terminal device supports using the first transport protocol and the second transport protocol to transmit user-plane positioning information, and only a second core network device that supports using the second transport protocol to transmit user-plane positioning information is present in the at least one second core network device. In this case, the first core network device determines that the second specified protocol includes the second transport protocol.

For another example, the first capability includes that the terminal device supports using the first transport protocol and the second transport protocol to transmit user-plane positioning information, and a second core network device that supports using the first transport protocol and the second transport protocol to transmit user-plane positioning information is present in the at least one second core network device. In this case, the first core network device determines that the second specified protocol includes one of the following: the first transport protocol, the second transport protocol, the first transport protocol or the second transport protocol, and the first transport protocol and the second transport protocol.

For another example, the first capability includes that the terminal device supports using the first transport protocol and the second transport protocol to transmit user-plane positioning information, and a second core network device that supports the user-plane positioning capability is absent in all second core network devices. In this case, the first core network device does not determine the second specified protocol, or the first core network device determines absence of the second specified protocol. Optionally, in this case, the first core network device may indicate rejecting a user-plane connection establishment request initiated by the terminal device or the second core network device.

In some embodiments, the positioning negotiation method 300 further includes:
receiving, by the first core network device, a third message from the second core network device; where the third message is used for establishing a user-plane positioning connection, and the third message includes the second specified protocol.

Specifically, in a case that the second message includes the second specified protocol, the first core network device receives the third message from the second core network device before the first core network device sends the second message.

In some embodiments, the third message may alternatively not include the second specified protocol; in this case, the second core network device supports all transport protocols for transmitting user-plane positioning information by default.

In some embodiments, the third message may further carry at least one of the following: an identifier of the terminal device (such as UE ID), security key information, an Internet Protocol (Internet Protocol, IP) address of the second core network device, or the like. Certainly, the third message may further carry other information, which is not limited by the embodiments of this application.

In some embodiments, after the first core network device receives the third message, the positioning negotiation method 300 further includes:
sending, by the first core network device, a fourth message to the second core network device.

The fourth message includes second confirmation information, and the second confirmation information is used to indicate that the terminal device accepts or rejects using the second specified protocol to transmit user-plane positioning information.

For example, the first core network device may determine the second confirmation information based on the first confirmation information, or the second confirmation information contains the same information as the first confirmation information.

In some embodiments, the fourth message may indicate whether the user-plane positioning connection has been successfully established. For example, in a case that the second confirmation information is used to indicate that the terminal device accepts using the second specified protocol to transmit user-plane positioning information, the fourth message may indicate that the user-plane positioning connection has been successfully established. For another example, in a case that the second confirmation information is used to indicate that the terminal device rejects using the second specified protocol to transmit user-plane positioning information, the fourth message may indicate that the user-plane positioning connection has not been successfully established.

In some embodiments, in a case that the second confirmation information indicates that the terminal device rejects using the second specified protocol to transmit user-plane positioning information, the fourth message further includes a third cause value, where the third cause value is used to indicate a reason why the terminal device rejects using the second specified protocol to transmit user-plane positioning information.

For example, the first core network device may determine the third cause value based on the first cause value, or the third cause value contains the same information as the first cause value.

In some embodiments, the third cause value includes one of the following: the second specified protocol is not supported, the first transport protocol is not supported, and the second transport protocol is not supported.

In some embodiments, in a case that the fourth message includes the third cause value, the fourth message further includes the first capability.

In some embodiments, before the first core network device receives the third message, the positioning negotiation method 300 further includes:
sending, by the first core network device, a fifth message to the second core network device; where the fifth message is used to obtain location information of the terminal device, and the fifth message includes the first capability.

In some embodiments, the second core network device sending the third message is selected by the first core network device from the at least one second core network device based on the first capability and/or the first specified protocol, and a transport protocol supported by at least one second core network device for transmitting user-plane positioning information.

Therefore, in this embodiment of this application, the first core network device can exchange information related to a transport protocol for transmitting the user-plane positioning information with the terminal device and/or the second core network device, so that the terminal side and the network side can negotiate and determine a transport protocol to be used for transmitting user-plane positioning information, thereby improving transmission efficiency of user-plane positioning information.

The following describes in detail the first core network device side embodiment of this application with reference to FIG. 6, and the following describes in detail the second core network device side embodiment of this application with reference to FIG. 7. It should be understood that the second core network device side embodiment and the first core network device side embodiment correspond to each other. For similar descriptions, reference may be made to the first core network device side embodiment.

FIG. 7 is a schematic flowchart of a positioning negotiation method 400 according to an embodiment of this application. As shown in FIG. 7, the positioning negotiation method 400 may include at least part of the following contents:
S410: A second core network device sends a third message to a first core network device.

The third message is used for establishing a user-plane positioning connection, the third message includes a second specified protocol, and the second specified protocol includes a transport protocol specified by the second core network device for transmitting user-plane positioning information.

It should be understood that FIG. 7 illustrates steps or operations of the positioning negotiation method 400, but these steps or operations are only examples. Other operations or variations to the operations in FIG. 7 may also be performed in the embodiments of this application.

The transport protocol for transmitting user-plane positioning information described in the embodiments of this application may also be referred to as a protocol stack for transmitting user-plane positioning information or a user-plane protocol stack, which is not limited in the embodiments of this application.

It should be noted that the embodiments of this application take two transport protocols for transmitting user-plane positioning information (that is, a first transport protocol and a second transport protocol) as an example for illustration. Certainly, the embodiments of this application are also applicable to more (for example, 3, 4, 5, ..., or the like) transport protocols for transmitting user-plane positioning information. For details, reference may be made to the related description in the embodiments of this application. For brevity, details are not described herein again.

In some embodiments, the first transport protocol is a user-plane location transport protocol not defined by 3GPP, and the second transport protocol is a user-plane location transport protocol defined by 3GPP.

In some embodiments, the first transport protocol is secure user plane location (SUPL). Certainly, the first transport protocol may also be any other user-plane location transport protocol not defined by 3GPP.

In some embodiments, the second transport protocol is location service user plane protocol (LCS-UPP). Certainly, the second transport protocol may also be any other user-plane location transport protocol defined by 3GPP.

In some embodiments, the first core network device may be an AMF entity, and certainly, the first core network device may alternatively be other core network devices, which is not limited in the embodiments of this application.

In some embodiments, the second core network device is a device that establishes a user-plane positioning connection with the terminal device, for example, the second core network device is an LMF entity. Certainly, the second core network device may also be any other core network device, which is not limited in the embodiments of this application.

In some embodiments, the second core network device may alternatively be replaced by a third-party device (such as a location service (LCS) client (client)) or a 5GC NF entity (such as an NWDAF).

In some embodiments, the third message is used to request establishment of a user-plane positioning connection. That is, the second core network device (such as an LMF entity) triggers or initiates the user-plane positioning procedure.

In some embodiments, the second specified protocol includes one of the following: a first transport protocol, a second transport protocol, the first transport protocol or the second transport protocol, and the first transport protocol and the second transport protocol.

For example, in a case that the second specified protocol includes the first transport protocol and the second transport protocol, one implementation is to use the first transport protocol to transmit an LPP message and use the second transport protocol to transmit a location service supplementary service (LCS-SS) message.

In some embodiments, the third message may alternatively not include the second specified protocol; in this case, the second core network device supports all transport protocols for transmitting user-plane positioning information by default.

In some embodiments, the third message may further carry at least one of the following: an identifier of the terminal device (such as UE ID), security key information, an IP address of the second core network device, or the like. Certainly, the third message may further carry other information, which is not limited by the embodiments of this application.

In some embodiments, the positioning negotiation method 400 further includes:
receiving, by the second core network device, a fourth message from the first core network device.

The fourth message includes second confirmation information, and the second confirmation information is used to indicate that a terminal device accepts or rejects using the second specified protocol to transmit user-plane positioning information.

In some embodiments, the fourth message may indicate whether the user-plane positioning connection has been successfully established. For example, in a case that the second confirmation information is used to indicate that the terminal device accepts using the second specified protocol to transmit user-plane positioning information, the fourth message may indicate that the user-plane positioning connection has been successfully established. For another example, in a case that the second confirmation information is used to indicate that the terminal device rejects using the second specified protocol to transmit user-plane positioning information, the fourth message may indicate that the user-plane positioning connection has not been successfully established.

In some embodiments, in a case that the second confirmation information indicates that the terminal device rejects using the second specified protocol to transmit user-plane positioning information, the fourth message further includes a third cause value, where the third cause value is used to indicate a reason why the terminal device rejects using the second specified protocol to transmit user-plane positioning information.

In some embodiments, the third cause value includes one of the following: the second specified protocol is not supported, the first transport protocol is not supported, and the second transport protocol is not supported.

In some embodiments, the fourth message further includes a first capability, and the first capability is used to indicate a transport protocol supported by the terminal device for transmitting user-plane positioning information.

In some embodiments, before the second core network device sends the third message, the positioning negotiation method 400 further includes:
receiving, by the second core network device, a fifth message from the first core network device; where the fifth message is used to obtain location information of the terminal device, the fifth message includes a first capability, and the first capability is used to indicate a transport protocol supported by the terminal device for transmitting user-plane positioning information.

In some embodiments, the first capability includes but is not limited to one of the following:
the terminal device supports using the first transport protocol to transmit user-plane positioning information;
the terminal device supports using the second transport protocol to transmit user-plane positioning information; and
the terminal device supports using the first transport protocol and the second transport protocol to transmit user-plane positioning information.

For example, that the terminal device supports using the first transport protocol to transmit user-plane positioning information includes:
the terminal device supports using the first transport protocol to transmit user-plane positioning information, and the terminal device does not support using the second transport protocol to transmit user-plane positioning information; or
the terminal device supports using the first transport protocol to transmit user-plane positioning information, and the terminal device does not support using other transport protocols to transmit user-plane positioning information; or
the terminal device supports using only the first transport protocol to transmit user-plane positioning information.

For example, that the terminal device supports using the second transport protocol to transmit user-plane positioning information includes:
the terminal device supports using the second transport protocol to transmit user-plane positioning information, and the terminal device does not support using the first transport protocol to transmit user-plane positioning information; or
the terminal device supports using the second transport protocol to transmit user-plane positioning information, and the terminal device does not support using other transport protocols to transmit user-plane positioning information; or
the terminal device supports using only the second transport protocol to transmit user-plane positioning information.

In some embodiments, by indicating that the terminal device supports the user-plane positioning capability, the first capability may indicate that the terminal device supports using the first transport protocol and/or the second transport protocol to transmit user-plane positioning information. That is, in a case that the terminal device supports the user-plane positioning capability, it is defaulted that the terminal device supports using the first transport protocol and/or the second transport protocol to transmit user-plane positioning information.

For example, in a case that the terminal device supports the user-plane positioning capability, it is defaulted that the terminal device supports using the first transport protocol to transmit user-plane positioning information.

For another example, in a case that the terminal device supports the user-plane positioning capability, it is defaulted that the terminal device supports using the second transport protocol to transmit user-plane positioning information.

For still another example, in a case that the terminal device supports the user-plane positioning capability, it is defaulted that the terminal device supports using the first transport protocol and the second transport protocol to transmit user-plane positioning information.

Therefore, in this embodiment of this application, the second core network device can exchange information related to a transport protocol for transmitting the user-plane positioning information with the terminal device and/or the first core network device, so that the terminal side and the network side can negotiate and determine a transport protocol to be used for transmitting user-plane positioning information, thereby improving transmission efficiency of user-plane positioning information.

The following describes the technical solutions of this application by using embodiment 1 to embodiment 4 as examples. During establishment of a user-plane positioning connection, one or more transport protocols (also referred to as a protocol stack) are used to transmit positioning information on user plane resources.

The following embodiment provides description by using the first core network device being an AMF entity and the second core network device being an LMF entity as an example, and using the first transport protocol being SUPL and the second transport protocol being LCS-UPP as an example. Specifically, the terminal side and the network side can exchange their respective supported transport protocols for transmitting user-plane positioning information, and the AMF entity or LMF entity determines a finally selected transport protocol for transmitting user-plane positioning information.

The following embodiments mainly focus on two procedures: one is a user-plane positioning procedure initiated by the terminal side (embodiment 1); the other is a user-plane positioning procedure initiated by the network side (embodiments 2, 3, and 4). In embodiment 1 and embodiment 2, the AMF entity determines the finally used transport protocol for transmitting user-plane positioning information; in embodiment 3, the LMF entity determines the finally used transport protocol used for transmitting user-plane positioning information; in embodiment 4, the LMF entity locally determines the transport protocol used for transmitting user-plane positioning information, and the terminal device replies to confirm whether to support or not.

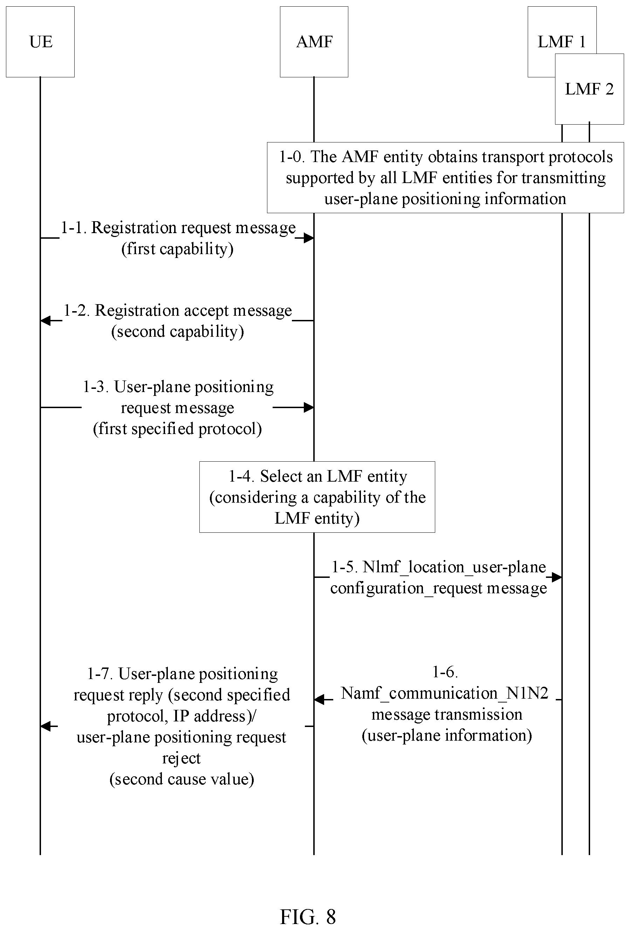

Embodiment 1: When the UE initiates a user-plane positioning request, the AMF entity determines the finally used transport protocol for transmitting user-plane positioning information. This may specifically include part or all of the following steps 1-0 to 1-7, as shown in FIG. 8.

Step 1-0: The AMF entity obtains, through local configuration or NRF query, and stores one or more transport protocols supported by the LMF entity for transmitting user-plane positioning information, where the transport protocols supported by the LMF entity for transmitting user-plane positioning information include but are not limited to: not supporting a user-plane positioning capability, supporting transmission of user-plane positioning information using SUPL, supporting transmission of user-plane positioning information using LCS-UPP, and supporting transmission of user-plane positioning information using SUPL and LCS-UPP. This step is omitted in the following embodiments 2 and 3, but it is still possible to obtain, through local configuration or NEF query, and store one or more transport protocols supported by the LMF entity for transmitting user-plane positioning information.

Step 1-1: A terminal device (UE) sends a registration request message to the AMF entity, aiming at providing registration information and performing network registration. In a case that bit information carried by the terminal device in the registration request message indicates that the terminal device supports the user-plane positioning capability, the terminal device provides a first capability in the registration request message, where the first capability includes but is not limited to: the terminal device supports using SUPL to transmit user-plane positioning information; the terminal device supports using LCS-UPP to transmit user-plane positioning information; and the terminal device supports using SUPL and LCS-UPP to transmit user-plane positioning information.

It should be noted that a difference between the first capability and the user-plane positioning capability lies in that: the latter refers to whether the user-plane positioning capability is supported, while the former refers to what transport protocol is supported for transmitting user-plane positioning information in a case that the user-plane positioning capability is supported.

Specifically, for example, the terminal device may indicate the first capability in a 5GMM capability, or may use a new IE to indicate the first capability. Optionally, the terminal device may send the registration request message carrying the first capability during the initial registration and periodic update procedure.

Step 1-2: The AMF entity stores the first capability as terminal context information (UE context). The AMF entity sends a registration accept message to the terminal device, aiming to inform the terminal device of a registration result and data of a control plane N1 connection. When the bit information carried by the terminal device in the registration request message indicates that the terminal device supports the user-plane positioning capability, the AMF entity includes the second capability and/or the network-supported user-plane positioning capability in the registration accept message.

The second capability includes but is not limited to:
the network does not support a user-plane positioning capability;
the network supports using SUPL to transmit user-plane positioning information;
the network supports using LCS-UPP to transmit user-plane positioning information; and
the network supports using SUPL and LCS-UPP to transmit user-plane positioning information.

The network-supported user-plane positioning capability includes but is not limited to:
the network supports user-plane positioning; and
the network does not support user-plane positioning.

In an implementation, the AMF entity includes the network-supported user-plane positioning capability, but not the second capability, in the registration accept message. After receiving the registration accept message, the terminal device learns that the network supports using all transport protocols to transmit user-plane positioning information.

It should be noted that if at least one LMF entity in the network supports using SUPL to transmit user-plane positioning information, it may indicate that the network supports using SUPL to transmit user-plane positioning information; if at least one LMF entity in the network supports using LCS-UPP to transmit user-plane positioning information, it may indicate that the network supports using LCS-UPP to transmit user-plane positioning information; if at least one LMF in the network not only supports using SUPL to transmit user-plane positioning information but also supports using LCS-UPP to transmit user-plane positioning information, it may indicate that the network supports using SUPL and LCS-UPP to transmit user-plane positioning information; and if none of LMFs in the network supports the user-plane positioning function, it may indicate that the network does not support the user-plane positioning capability.

In an implementation, the network may mandatorily support using SUPL and LCS-UPP to transmit user-plane positioning information; or, in a case that a plurality of LMF entities are present in the network, some LMF entities support using SUPL to transmit user-plane positioning information and some LMF entities support using LCS-UPP to transmit user-plane positioning information, then the network supports using SUPL and LCS-UPP to transmit user-plane positioning information.

Optionally, the AMF entity directly includes the second capability in the registration accept message, without considering whether the bit information carried by the terminal device in the registration request message indicates whether the terminal device supports the user-plane positioning capability.

In an implementation, the AMF entity indicates the second capability in a 5GS network feature (network feature) support (support) IE.

Step 1-3: If the terminal device expects to use the user-plane positioning function during subsequent use, the terminal device sends a user-plane positioning request message to the network side (that is, the terminal device triggers the user-plane positioning procedure), carrying a first specified protocol, where the first specified protocol includes a transport protocol that the terminal device expects to use for transmitting user-plane positioning information.

The first specified protocol includes one of the following:
SUPL;
LCS-UPP;
SUPL or LCS-UPP (it should be noted that if the UE does not provide the first specified protocol and indicates that SUPL and LCS-UPP are supported, after receiving the user-plane positioning establishment request message, the network side considers by default that the terminal device supports all protocols); and
SUPL and LCS-UPP (it should be noted that this option is used when both the terminal side and the network side support SUPL and LCS-UPP, SUPL may be used to transmit LPP messages, and LCS-UPP may be used to transmit LCS-SS messages).

It should be noted that when steps 1-1 and 1-2 are performed, and the terminal device learns that the transport protocol supported by the network side is different from that supported by the terminal device (for example, the terminal device supports SUPL and the network supports LCS-UPP, or the terminal device supports LCS-UPP and the network supports SUPL), the terminal device cannot initiate a user-plane positioning establishment request message (that is, step 1-3). When both the network side and the terminal side support SUPL and LCS-UPP, the terminal device can optionally provide the first specified protocol to the network.

Step 1-4: The AMF entity performs at least one of the following operations:
selecting an LMF entity, considering a user-plane positioning protocol stack capability of the LMF; and
determining a second specified protocol, where the second specified protocol includes a transport protocol specified by the AMF entity for transmitting user-plane positioning information.

In an implementation, a policy control function (Policy Control Function, PCF) entity indicates the second specified protocol in a terminal policy (UE policy) related procedure.

Step 1-5 and step 1-6: The AMF entity and the LMF entity exchange user-plane positioning information.

Step 1-7: If the network can provide a user-plane positioning service for the terminal, the AMF entity sends a user-plane positioning reply message to the terminal device, carrying the second specified protocol and IP address information.

The IP address information is used to indicate an address of the LMF entity.

The second specified protocol includes one of the following:
SUPL;
LCS-UPP; and
SUPL and LCS-UPP (it should be noted that this option is used when both parties support two protocol stacks, where one implementation is to use SUPL to transmit LPP messages and use LCS-UPP to transmit LCS-SS messages).

Specifically, if the network cannot provide the user-plane positioning service for the terminal, the AMF entity sends a user-plane positioning reject message to the terminal device, carrying a second cause value. The second cause value is used to indicate a reason why a network rejects a user-plane positioning connection establishment request initiated by the terminal device.

The second cause value includes at least one of the following: the first specified protocol is not supported, SUPL is not supported, LCS-UPP is not supported, and the LMF entity is congested.

Optionally, in a case that the user-plane positioning reject message carries the second cause value, the user-plane positioning reject message further includes transport protocol information supported by the network for transmitting user-plane positioning information.

It should be noted that, in this embodiment, regarding capability interaction in step 1-1 and step 1-2 and communication of transport protocols (also referred to as protocol stacks) in step 1-3 and step 1-7, the following descriptions apply:
(1) One of capability interaction and transport protocol communication needs to be performed; otherwise, determining a transport protocol cannot be completed.
(2) When the UE or the network indicates supporting the user-plane positioning capability, it indicates supporting use of at least one transport protocol to transmit user-plane positioning information (one of which: supporting SUPL; supporting LCS-UPP; and supporting SUPL and LCS-UPP).
(3) When capability interaction is mandatory: step 1-2 is mandatory. The terminal device knows the transport protocol supported by itself for transmitting positioning information, and needs to know the transport protocol supported by the network for transmitting positioning information. If the terminal supports a transport protocol A and the network supports the transport protocol A in step 1-2, the subsequent information may not be carried (or the subsequent steps may not be executed), because only the transport protocol A can be used. If the terminal device supports the transport protocol A and the network supports a transport protocol B in step 1-2, the terminal device cannot send the user-plane positioning request message in step 1-3. If the terminal device supports the transport protocol A and the transport protocol B, and the transport protocol A is supported in step 1-2, the terminal device can choose to use only the transport protocol A, and subsequent information may not be carried. If the terminal supports the transport protocol A and the transport protocol B, and both protocols are supported in step 1-2, which transport protocol to be used for transmitting positioning information is selected based on its own implementation, or is determined by performing the transport protocol communication part in step 1-3 and step 1-7.
(4) When transport protocol communication is mandatory: in this case, capability interaction is not performed. Before the connection is established, both the terminal side and the network side do not know a transport protocol supported by the other side, and may only support one or both. Both sides need to perform step 1-3/step 1-7 to determine a transport protocol to be finally used for transmitting positioning information.

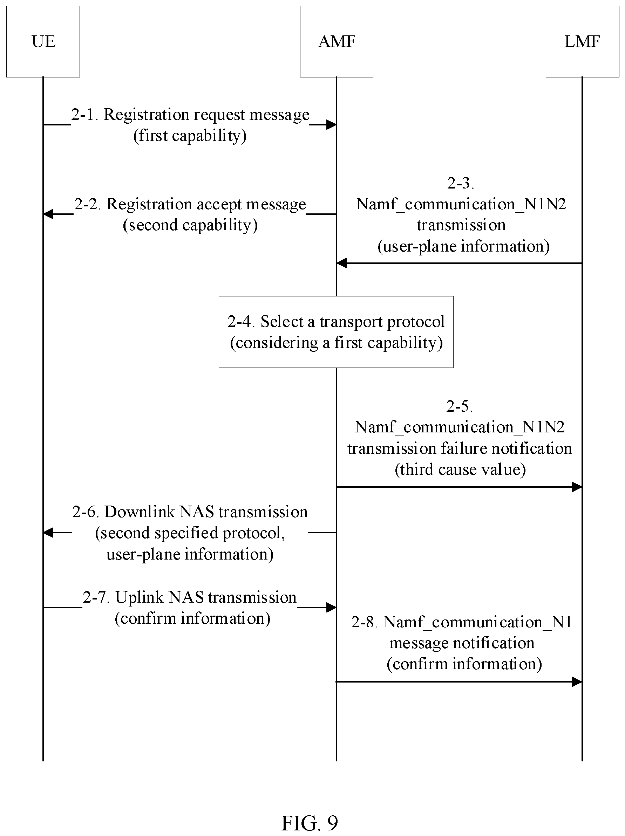

Embodiment 2: When the LMF entity initiates a user-plane positioning request, the AMF entity determines the finally used transport protocol for transmitting user-plane positioning information. This may specifically include part or all of the following steps 2-1 to 2-8, as shown in FIG. 9.

Step 2-1: A terminal device (UE) sends a registration request message to the AMF entity, aiming at providing registration information and performing network registration. In a case that bit information carried by the terminal device in the registration request message indicates that the terminal device supports the user-plane positioning capability, the terminal device provides a first capability in the registration request message, where the first capability is used to indicate a transport protocol supported by the terminal device for transmitting user-plane positioning information, and the first capability includes but is not limited to: the terminal device supports using SUPL to transmit user-plane positioning information; the terminal device supports using LCS-UPP to transmit user-plane positioning information; and the terminal device supports using SUPL and LCS-UPP to transmit user-plane positioning information.

It should be noted that a difference between the first capability and the user-plane positioning capability lies in that: the latter refers to whether the user-plane positioning capability is supported, while the former refers to what transport protocol is supported for transmitting user-plane positioning information in a case that the user-plane positioning capability is supported.

Specifically, for example, the terminal device may indicate the first capability in a 5GMM capability, or may use a new IE to indicate the first capability. Optionally, the terminal device may send the registration request message carrying the first capability during the initial registration and periodic update procedure.

Step 2-2: The AMF entity stores the first capability as terminal context information (UE context). The AMF entity sends a registration accept message to the terminal device, aiming to inform the terminal device of a registration result and data of a control plane N1 connection. When the bit information carried by the terminal device in the registration request message indicates that the terminal device supports the user-plane positioning capability, the AMF entity includes the second capability and/or the network-supported user-plane positioning capability in the registration accept message.

The second capability includes but is not limited to:
the network does not support a user-plane positioning capability;
the network supports using SUPL to transmit user-plane positioning information;
the network supports using LCS-UPP to transmit user-plane positioning information; and
the network supports using SUPL and LCS-UPP to transmit user-plane positioning information.

The network-supported user-plane positioning capability includes but is not limited to:
the network supports user-plane positioning; and
the network does not support user-plane positioning.

In an implementation, the AMF entity includes the network-supported user-plane positioning capability, but not the second capability, in the registration accept message. After receiving the registration accept message, the terminal device learns that the network supports using all transport protocols to transmit user-plane positioning information.

It should be noted that if at least one LMF entity in the network supports using SUPL to transmit user-plane positioning information, it may indicate that the network supports using SUPL to transmit user-plane positioning information; if at least one LMF entity in the network supports using LCS-UPP to transmit user-plane positioning information, it may indicate that the network supports using LCS-UPP to transmit user-plane positioning information; if at least one LMF in the network not only supports using SUPL to transmit user-plane positioning information but also supports using LCS-UPP to transmit user-plane positioning information, it may indicate that the network supports using SUPL and LCS-UPP to transmit user-plane positioning information; and if none of LMFs in the network supports the user-plane positioning function, it may indicate that the network does not support the user-plane positioning capability.

In an implementation, the network may mandatorily support using SUPL and LCS-UPP to transmit user-plane positioning information; or, in a case that a plurality of LMF entities are present in the network, some LMF entities support using SUPL to transmit user-plane positioning information and some LMF entities support using LCS-UPP to transmit user-plane positioning information, then the network supports using SUPL and LCS-UPP to transmit user-plane positioning information.

Optionally, the AMF entity directly includes the second capability in the registration accept message, without considering whether the bit information carried by the terminal device in the registration request message indicates whether the terminal device supports the user-plane positioning capability.

In an implementation, the AMF entity indicates the second capability in a 5GS network feature support IE.

Step 2-3: The LMF entity sends a message to the AMF entity to request to establish a user-plane positioning connection, carrying a second specified protocol, a UE ID, security key information, and an LMF IP address; where the second specified protocol includes a transport protocol specified by the LMF entity for transmitting user-plane positioning information. If the second specified protocol is optionally not carried, the AMF entity learns that the LMF entity supports all transport protocols.

Step 2-4: The AMF entity performs transport protocol selection, considering a first capability in the stored UE context, where the first capability is used to indicate a transport protocol supported by the terminal device for transmitting user-plane positioning information.

In some embodiments, the first capability includes but is not limited to one of the following:
the terminal device supports using SUPL to transmit user-plane positioning information;
the terminal device supports using LCS-UPP to transmit user-plane positioning information; and
the terminal device supports using SUPL and LCS-UPP to transmit user-plane positioning information.

Specifically, the operation examples of transport protocol selection are as follows: if both the terminal and the network support a transport protocol A, the transport protocol A is selected as the transport protocol, and step 2-6 is performed; if one party supports the transport protocol A and the other party supports a transport protocol B, the transport protocol specified by the LMF entity does not coincide with the transport protocol currently supported by the UE, and step 2-5 is performed; if one party supports the transport protocol A and the transport protocol B, and the other party supports the transport protocol A, the transport protocol A is selected to transmit user-plane positioning information, and step 2-6 is performed; and if both the terminal and the network support a plurality of protocol stacks, the AMF entity selects, based on the local policy, the transport protocol for transmitting the user-plane positioning information, and performs step 2-6 to step 2-8.

Step 2-5: If the transport protocol specified by the LMF entity for transmitting user-plane positioning information does not coincide with the transport protocol currently supported by the UE for transmitting user-plane positioning information, the AMF entity sends a notification message to the LMF entity, carrying a third cause value, where the third cause value is used to indicate a reason why the terminal device rejects using the second specified protocol to transmit user-plane positioning information.

Optionally, the third cause value includes one of the following: the second specified protocol is not supported, SUPL is not supported, and LCS-UPP is not supported.

Optionally, the notification message in step 2-5 further includes the first capability.

Step 2-6: If the transport protocol specified by the LMF entity for transmitting user-plane positioning information coincides with the transport protocol currently supported by the UE for transmitting user-plane positioning information, the AMF entity sends a user-plane positioning request message to the terminal, carrying the second specified protocol.

For the user-plane positioning request message, one method is to use a payload container (payload container) IE in a downlink NAS transport (DL NAS TRANSPORT) message for transmission, and another method is to use a new IE in the downlink NAS transport (DL NAS TRANSPORT) message for transmission.

Step 2-7: The terminal device sends a user-plane positioning reply message to the network side, for confirming the user-plane positioning request message in step 2-6 and establishing user plane resources.

For the user-plane positioning reply message, one method is to use a new IE in the uplink NAS transport (UL NAS TRANSPORT) message for transmission.

Step 2-8: The AMF entity sends a confirmation message to the LMF entity to indicate whether a user-plane positioning connection has been successfully established.

It should be noted that, in this embodiment, regarding the capability interaction in step 1/step 2 and the transport protocol (which may also be referred to as protocol stack) confirmation in step 2-6, there are the following descriptions apply:
(1) One of capability interaction and transport protocol determining needs to be performed; otherwise, determining a transport protocol cannot be completed.
(2) When the UE indicates supporting the user-plane positioning capability, it indicates supporting use of at least one transport protocol to transmit user-plane positioning information (one of which: supporting SUPL; supporting LCS-UPP; and supporting SUPL and LCS-UPP); and which one to be finally used is determined in communication in step 2-6 to step 2-8.
(3) When capability interaction is mandatory: step 2-1 is mandatory. The network knows the transport protocol supported by itself for transmitting positioning information, and also needs to know the transport protocol supported by the terminal for transmitting positioning information. If the network supports the transport protocol A, and the terminal supports the transport protocol A in step 2-1, the subsequent information may not be carried to the terminal, because only the transport protocol A can be used. If the network supports only the transport protocol A and the terminal supports the transport protocol B in step 2-1, the AMF may reject the user-plane positioning service for the terminal in step 2-5, and step 2-6 may not be performed. If the network supports the transport protocol A and the transport protocol B, and the terminal supports only the transport protocol A in step 2-1, the network can choose to use only the transport protocol A, and subsequent information may not be carried. If the network supports the transport protocol A and the transport protocol B, and the terminal supports the transport protocol A and the transport protocol B in step 2-1, which transport protocol to be used for transmitting positioning information is selected based on its own implementation, and is informed to the terminal in step 2-6.
(4) When transport protocol communication is mandatory: in this case, capability interaction is not performed. Before the connection is established, both the terminal side and the network side do not know a protocol stack supported by the other side, and may only support one or both. Both sides need to perform step 2-6 and step 2-7 to determine a transport protocol to be finally used for transmitting positioning information.

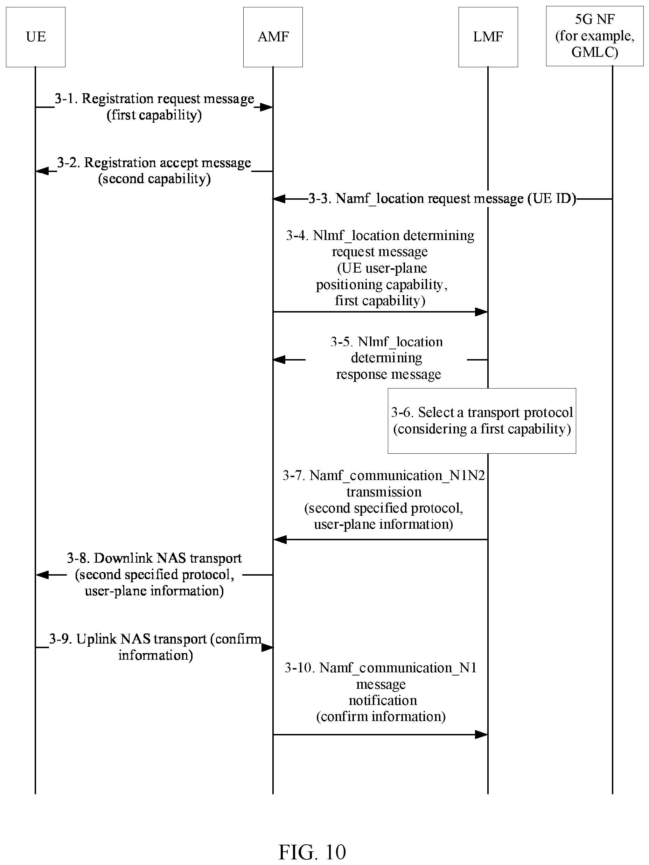

Embodiment 3: When the AMF entity requests location information of the UE, the AMF entity informs the LMF entity of a first capability, and the LMF entity determines a transport protocol used for transmitting the user-plane positioning information, where the first capability is used to indicate a transport protocol supported by the terminal device for transmitting the user-plane positioning information, which may specifically include part or all of the following step 3-1 to step 3-10, as shown in FIG. 10.

Step 3-1: A terminal device (UE) sends a registration request message to the AMF entity, aiming at providing registration information and performing network registration. In a case that bit information carried by the terminal device in the registration request message indicates that the terminal device supports the user-plane positioning capability, the terminal device provides a first capability in the registration request message, where the first capability includes but is not limited to: the terminal device supports using SUPL to transmit user-plane positioning information; the terminal device supports using LCS-UPP to transmit user-plane positioning information; and the terminal device supports using SUPL and LCS-UPP to transmit user-plane positioning information.

It should be noted that a difference between the first capability and the user-plane positioning capability lies in that: the latter refers to whether the user-plane positioning capability is supported, while the former refers to what transport protocol is supported for transmitting user-plane positioning information in a case that the user-plane positioning capability is supported.

Specifically, for example, the terminal device may indicate the first capability in a 5GMM capability, or may use a new IE to indicate the first capability. Optionally, the terminal device may send the registration request message carrying the first capability during the initial registration and periodic update procedure.

Step 3-2: The AMF entity stores the first capability as terminal context information (UE context). The AMF entity sends a registration accept message to the terminal device, aiming to inform the terminal device of a registration result and data of a control plane N1 connection. When the bit information carried by the terminal device in the registration request message indicates that the terminal device supports the user-plane positioning capability, the AMF entity includes the second capability and/or the network-supported user-plane positioning capability in the registration accept message.

The second capability includes but is not limited to:
the network does not support a user-plane positioning capability;
the network supports using SUPL to transmit user-plane positioning information;
the network supports using LCS-UPP to transmit user-plane positioning information; and
the network supports using SUPL and LCS-UPP to transmit user-plane positioning information.

The network-supported user-plane positioning capability includes but is not limited to:
the network supports user-plane positioning; and
the network does not support user-plane positioning.

In an implementation, the AMF entity includes the network-supported user-plane positioning capability, but not the second capability, in the registration accept message. After receiving the registration accept message, the terminal device learns that the network supports using all transport protocols to transmit user-plane positioning information.

It should be noted that if at least one LMF entity in the network supports using SUPL to transmit user-plane positioning information, it may indicate that the network supports using SUPL to transmit user-plane positioning information; if at least one LMF entity in the network supports using LCS-UPP to transmit user-plane positioning information, it may indicate that the network supports using LCS-UPP to transmit user-plane positioning information; if at least one LMF in the network not only supports using SUPL to transmit user-plane positioning information but also supports using LCS-UPP to transmit user-plane positioning information, it may indicate that the network supports using SUPL and LCS-UPP to transmit user-plane positioning information; and if none of LMFs in the network supports the user-plane positioning function, it may indicate that the network does not support the user-plane positioning capability.

In an implementation, the network may mandatorily support using SUPL and LCS-UPP to transmit user-plane positioning information; or, in a case that a plurality of LMF entities are present in the network, some LMF entities support using SUPL to transmit user-plane positioning information and some LMF entities support using LCS-UPP to transmit user-plane positioning information, then the network supports using SUPL and LCS-UPP to transmit user-plane positioning information.

Optionally, the AMF entity directly includes the second capability in the registration accept message, without considering whether the bit information carried by the terminal device in the registration request message indicates whether the terminal device supports the user-plane positioning capability.

In an implementation, the AMF entity indicates the second capability in a 5GS network feature support IE.

Step 3-3: The AMF entity receives a location request message of a 5G network element, where the message carries information such as a UE ID.

Step 3-4: The AMF entity selects one LMF entity and sends a location request confirmation message to the selected LMF entity, carrying a user-plane positioning capability of the terminal device and the first capability.

Step 3-5: The LMF entity replies that it has received the location request confirmation message of step 3-4.

Step 3-6: The LMF entity stores the information in step 3-4. In addition, the LMF entity performs transport protocol selection: considering the first capability and a transport protocol supported by the LMF entity itself for transmitting user-plane positioning information, a second specified protocol is determined, where the second specified protocol includes a transport protocol specified by the LMF entity for transmitting user-plane positioning information.

Optionally, the second specified protocol includes but is not limited to one of the following:
SUPL, LCS-UPP, SUPL or LCS-UPP, and SUPL and LCS-UPP.

It should be noted that if the transport protocol supported by the terminal for transmitting user-plane positioning information does not coincide with the transport protocol supported by the LMF entity for transmitting user-plane positioning information, the LMF entity cannot initiate establishment of a user-plane positioning connection with the terminal.

Step 3-7: The LMF entity sends a Namf_communication_N1N2 transmission (user-plane positioning request message) to the AMF entity to request to establish a user-plane positioning connection, carrying the second specified protocol.

Step 3-8: The AMF entity sends a downlink NAS transport (that is, a user-plane positioning request message) to the terminal, carrying the second specified protocol.

For the user-plane positioning request message, one method is to use a payload container (payload container) IE in a downlink NAS transport (DL NAS TRANSPORT) message for transmission, and another method is to use a new IE in the downlink NAS transport (DL NAS TRANSPORT) message for transmission.

Step 3-9: The terminal device sends a user-plane positioning reply message to the network side, for confirming the user-plane positioning request message in step 3-7 and establishing user plane resources.

For the user-plane positioning reply message, one method is to use a new IE in the uplink NAS transport (UL NAS TRANSPORT) message for transmission.

Step 3-10: The AMF entity sends a confirmation message to the LMF entity to indicate whether a user-plane positioning connection has been successfully established.

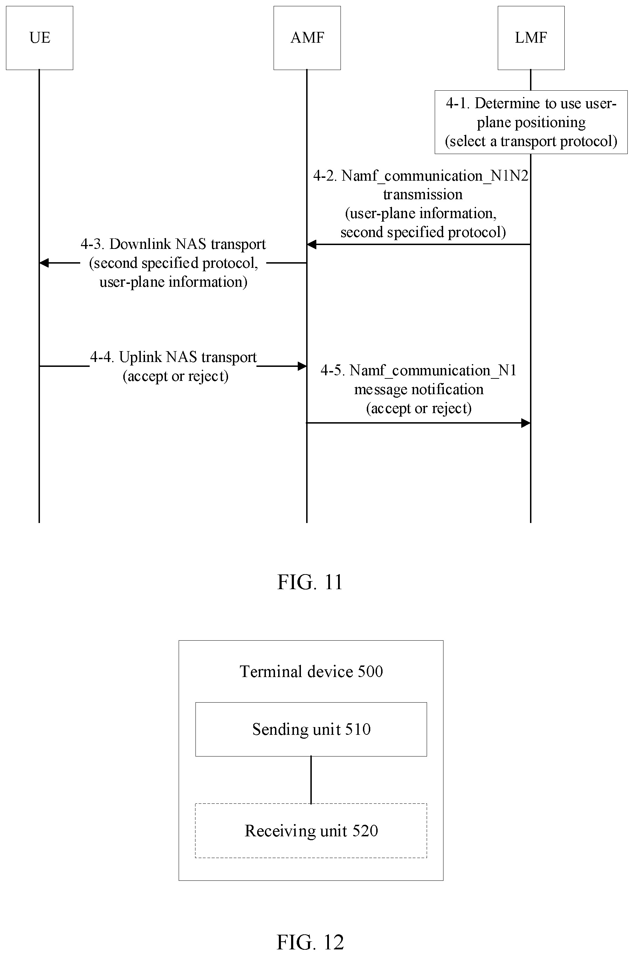

Embodiment 4: If capability interaction is not performed when the LMF entity initiates a user-plane positioning request, the LMF entity directly selects one transport protocol for transmitting user-plane positioning information, which may be accepted or rejected by the UE subsequently in the reply. Part or all of the following step 4-1 to step 4-5 may be specifically included, as shown in FIG. 11.

Step 4-1: The LMF entity determines to use user-plane positioning, and selects a transport protocol to be used for transmitting user-plane positioning information.

Step 4-2: The LMF entity sends a user-plane positioning request message to the AMF entity to request to establish a user-plane positioning connection, carrying a second specified protocol; where the second specified protocol includes a transport protocol specified by the LMF entity for transmitting user-plane positioning information.

Optionally, the second specified protocol includes but is not limited to one of the following:
SUPL, LCS-UPP, SUPL or LCS-UPP, and SUPL and LCS-UPP.

Step 4-3: The AMF entity sends a user-plane positioning request message to the terminal, carrying the second specified protocol.

For the user-plane positioning request message, one method is to use a payload container (payload container) IE in a downlink NAS transport (DL NAS TRANSPORT) message for transmission, and another method is to use a new IE in the downlink NAS transport (DL NAS TRANSPORT) message for transmission.

Step 4-4: The terminal device sends a user-plane positioning reply message to the network side, including an accept message and a reject message. Accept means that the user-plane positioning request message of step 4-3 has been received and user plane resources are established. The reject message is rejection of the user-plane positioning request message in step 4-3, and optionally carries a first cause value, where the first cause value is used to indicate a reason why the terminal device rejects a request for establishing the user-plane positioning connection initiated by the network.

Optionally, the first cause value includes, but is not limited to, one of the following: the second specified protocol is not supported, SUPL is not supported, and LCS-UPP is not supported.

Optionally, in a case that the first message includes the first cause value, the first message further includes a transport protocol supported by the terminal device for transmitting user-plane positioning information.

For the user-plane positioning reply message, one method is to use a new IE in the uplink NAS transport (UL NAS TRANSPORT) message for transmission.

It should be noted that the AMF entity does not store the first capability and the second capability; where the first capability is used to indicate a transport protocol supported by the terminal device for transmitting user-plane positioning information, and the second capability is used to indicate a transport protocol supported by the network for transmitting user-plane positioning information. If the LMF entity selects a transport protocol based on a local policy, and sends it to the terminal in step 4-3, then after receiving the message in step 4-3, if the terminal finds that the second specified protocol is not supported locally, the first cause value is carried in the reply message.

Step 4-5: The AMF entity replies an accept or reject message to the LMF entity. Optionally, if the terminal device does not support the second specified protocol, the transport protocol supported by the terminal device for transmitting user-plane positioning information is stored in the LMF entity or the AMF entity. If the transport protocol supported by the terminal device for transmitting user-plane positioning information is provided in step 4-4, the LMF entity may include the supported transport protocol in the subsequent user-plane positioning request.

The foregoing describes in detail the method embodiments of this application with reference to FIG. 5 to FIG. 11, and the following describes in detail the apparatus embodiments of this application with reference to FIG. 12 to FIG. 14. It should be understood that the apparatus embodiments and the method embodiments correspond to each other. For similar descriptions, reference may be made to the method embodiments.

FIG. 12 is a schematic block diagram of a positioning negotiation apparatus 500 according to an embodiment of this application. As shown in FIG. 12, the positioning negotiation apparatus 500 includes:
a sending unit 510, configured to send a first message to a first core network device, where the first message is used for performing network registration or establishing a user-plane positioning connection.

The first message includes one or more of the following: a first capability, a first specified protocol, and first confirmation information; and
the first capability is used to indicate a transport protocol supported by the positioning negotiation apparatus 500 for transmitting user-plane positioning information; the first specified protocol includes a transport protocol that the positioning negotiation apparatus 500 expects to use for transmitting user-plane positioning information; and the first confirmation information is used to indicate whether the positioning negotiation apparatus 500 accepts or rejects use of a second specified protocol for transmitting user-plane positioning information, where the second specified protocol includes a transport protocol specified by the first core network device or a second core network device for transmitting user-plane positioning information.

In some embodiments, the first capability includes one of the following:
the positioning negotiation apparatus 500 supports using a first transport protocol to transmit user-plane positioning information;
the positioning negotiation apparatus 500 supports using a second transport protocol to transmit user-plane positioning information; and
the positioning negotiation apparatus 500 supports using the first transport protocol and the second transport protocol to transmit user-plane positioning information.

In some embodiments, the first specified protocol includes one of the following:
a first transport protocol, a second transport protocol, the first transport protocol or the second transport protocol, and the first transport protocol and the second transport protocol.

In some embodiments, the second specified protocol includes one of the following:
a first transport protocol, a second transport protocol, the first transport protocol or the second transport protocol, and the first transport protocol and the second transport protocol.

In some embodiments, in a case that the first message includes the first confirmation information, and the first confirmation information indicates that the positioning negotiation apparatus 500 rejects using the second specified protocol to transmit the user-plane positioning information, the first message further includes a first cause value, where the first cause value is used to indicate a reason why the positioning negotiation apparatus 500 rejects a user-plane positioning connection establishment request initiated by a network.

In some embodiments, the first cause value includes one of the following: the second specified protocol is not supported, a first transport protocol is not supported, and a second transport protocol is not supported.

In some embodiments, the first message further includes a transport protocol supported by the positioning negotiation apparatus 500 for transmitting user-plane positioning information.

In some embodiments, in a case that the first message is used for performing network registration, the first message includes the first capability; or
in a case that the first message is used for establishing a user-plane positioning connection, the first message includes one or more of the following: the first capability, the first specified protocol, and the first confirmation information.

In some embodiments, the positioning negotiation apparatus 500 further includes:
a receiving unit 520, configured to receive a second message from the first core network device, where the second message is used for network registration or establishing a user-plane positioning connection.

The second message includes one or more of the following: a second capability, a second specified protocol, and a second cause value.

The second capability is used to indicate a network-supported transport protocol for transmitting user-plane positioning information, and the second cause value is used to indicate a reason why a network rejects a user-plane positioning connection establishment request initiated by the positioning negotiation apparatus 500.

In some embodiments, in a case that the first message includes the first capability, the second message is received by the positioning negotiation apparatus 500 after the first message is sent, and the second message includes the second capability; or
in a case that the first message includes the first specified protocol, the second message is received by the positioning negotiation apparatus 500 after the first message is sent, the second message is used to indicate accepting a user-plane positioning connection establishment request initiated by the positioning negotiation apparatus 500, and the second message carries the second specified protocol; or in a case that the first message includes the first specified protocol, the second message is received by the positioning negotiation apparatus 500 after the first message is sent, the second message is used to indicate rejecting a user-plane positioning connection establishment request initiated by the positioning negotiation apparatus 500, and the second message carries the second cause value; or
in a case that the first message includes the first confirmation information, the second message is received by the positioning negotiation apparatus 500 before the first message is sent, and the second message carries the second specified protocol.

In some embodiments, the second capability includes one of the following:
the network does not support a user-plane positioning capability;
the network supports using the first transport protocol to transmit user-plane positioning information;
the network supports using the second transport protocol to transmit user-plane positioning information; and
the network supports using the first transport protocol and the second transport protocol to transmit user-plane positioning information.

In some embodiments, the second capability, by indicating that the network supports the user-plane positioning capability, indicates that the network supports using the first transport protocol and/or the second transport protocol to transmit user-plane positioning information.

In some embodiments, the second cause value includes at least one of the following: the first specified protocol is not supported, the first transport protocol is not supported, the second transport protocol is not supported, and the second core network device is congested.

In some embodiments, in a case that the second message carries the second cause value, the second message further includes network-supported transport protocol information for transmitting user-plane positioning information.

In some embodiments, in a case that the second message is used for network registration, the second message includes the second capability; or
in a case that the second message is used to establish a user-plane positioning connection, the second message includes one or more of the following: the second capability, the second specified protocol, and the second cause value.

In some embodiments, the second specified protocol is determined by the first core network device or the second core network device.

In some embodiments, the first transport protocol is a non-3rd generation partnership project 3GPP-defined user-plane location transport protocol, and the second transport protocol is a 3GPP-defined user-plane location transport protocol.

In some embodiments, the sending unit and the receiving unit may be communication interfaces or transceivers, or input/output interfaces of a communication chip or a system on chip.

It should be understood that the positioning negotiation apparatus 500 according to this embodiment of this application may correspond to the terminal device in the method embodiments of this application, and the above and other operations and/or functions of the units of the positioning negotiation apparatus 500 are respectively used for implementing the corresponding procedures of the terminal device in the method 200 shown in FIG. 5. For brevity, details are not described herein again.

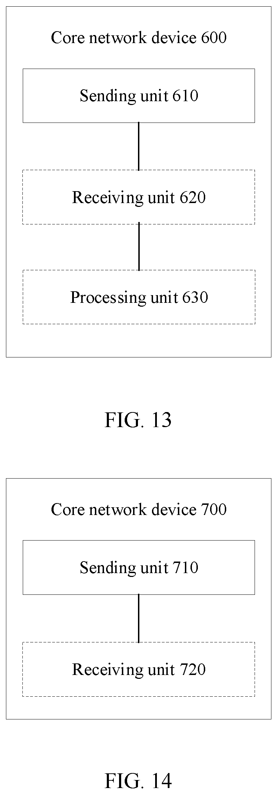

FIG. 13 is a schematic block diagram of a positioning negotiation apparatus 600 according to an embodiment of this application. As shown in FIG. 13, the positioning negotiation apparatus 600 includes:
a sending unit 610, configured to send a second message to a terminal device, where the second message is used for network registration or establishing a user-plane positioning connection.

The second message includes one or more of the following: a second capability, a second specified protocol, and a second cause value.

The second capability is used to indicate a transport protocol supported by a network for transmitting user-plane positioning information, the second specified protocol includes a transport protocol specified by the positioning negotiation apparatus 600 or a second core network device for transmitting user-plane positioning information, and the second cause value is used to indicate a reason why the network rejects a user-plane positioning connection establishment request initiated by the terminal device.

In some embodiments, the second capability includes one of the following:
the network does not support a user-plane positioning capability;
the network supports using the first transport protocol to transmit user-plane positioning information;
the network supports using the second transport protocol to transmit user-plane positioning information; and
the network supports using the first transport protocol and the second transport protocol to transmit user-plane positioning information.

In some embodiments, the second capability, by indicating that the network supports the user-plane positioning capability, indicates that the network supports using the first transport protocol and/or the second transport protocol to transmit user-plane positioning information.

In some embodiments, the second cause value includes at least one of the following: a first specified protocol is not supported, a first transport protocol is not supported, a second transport protocol is not supported, and the second core network device is congested; and
the first specified protocol includes a transport protocol that the terminal device expects to use for transmitting user-plane positioning information.

In some embodiments, in a case that the second message carries the second cause value, the second message further includes network-supported transport protocol information for transmitting user-plane positioning information.

In some embodiments, the second specified protocol includes one of the following: a first transport protocol, a second transport protocol, the first transport protocol or the second transport protocol, and the first transport protocol and the second transport protocol.

In some embodiments, the second specified protocol is determined by the positioning negotiation apparatus 600 or the second core network device.

In some embodiments, in a case that the second message is used for network registration, the second message includes the second capability; or
in a case that the second message is used to establish a user-plane positioning connection, the second message includes one or more of the following: the second capability, the second specified protocol, and the second cause value.

In some embodiments, the positioning negotiation apparatus 600 further includes:
a receiving unit 620, configured to receive a first message from the terminal device, where the first message is used for network registration or establishing a user-plane positioning connection.

The first message includes one or more of the following: a first capability, a first specified protocol, and first confirmation information; and
the first capability is used to indicate a transport protocol supported by the terminal device for transmitting user-plane positioning information; the first specified protocol includes a transport protocol that the terminal device expects to use for transmitting user-plane positioning information; and the first confirmation information is used to indicate whether the terminal device accepts or rejects using the second specified protocol to transmit user-plane positioning information.

In some embodiments, in a case that the first message includes the first capability, the second message is sent by the positioning negotiation apparatus 600 after the first message is received, and the second message includes the second capability; or
in a case that the first message includes the first specified protocol, the second message is sent by the positioning negotiation apparatus 600 after the first message is received, the second message is used to indicate accepting a user-plane positioning connection establishment request initiated by the terminal device, and the second message carries the second specified protocol; or in a case that the first message includes the first specified protocol, the second message is sent by the positioning negotiation apparatus 600 after the first message is received, the second message is used to indicate rejecting a user-plane positioning connection establishment request initiated by the terminal device, and the second message carries the second cause value; or
if the first message includes the first confirmation information, the second message is sent by the positioning negotiation apparatus 600 before the first message is received, and the second message carries the second specified protocol.

In some embodiments, the first capability includes one of the following:
the terminal device supports using the first transport protocol to transmit user-plane positioning information;
the terminal device supports using the second transport protocol to transmit user-plane positioning information; and
the terminal device supports using the first transport protocol and the second transport protocol to transmit user-plane positioning information.

In some embodiments, the first specified protocol includes one of the following: a first transport protocol, a second transport protocol, the first transport protocol or the second transport protocol, and the first transport protocol and the second transport protocol.

In some embodiments, in a case that the first message includes the first confirmation information, and the first confirmation information indicates that the terminal device rejects using the second specified protocol to transmit the user-plane positioning information, the first message further includes a first cause value, where the first cause value is used to indicate a reason why the terminal device rejects a user-plane positioning connection establishment request initiated by a network.

In some embodiments, the first cause value includes one of the following: the second specified protocol is not supported, the first transport protocol is not supported, and the second transport protocol is not supported.

In some embodiments, the first message further includes a transport protocol supported by the terminal device for transmitting user-plane positioning information.

In some embodiments, the positioning negotiation apparatus 600 further includes a processing unit 630.

The processing unit 630 is configured to: based on the first capability and/or the first specified protocol, and a transport protocol supported by at least one second core network device for transmitting user-plane positioning information, select a second core network device from the at least one second core network device to establish a user-plane positioning connection with the terminal device; and/or
the processing unit 630 is configured to determine the second specified protocol based on the first capability and/or the first specified protocol and a transport protocol supported by at least one second core network device for transmitting user-plane positioning information.

In some embodiments, before the positioning negotiation apparatus 600 sends the second message, the receiving unit 620 is configured to receive a third message from the second core network device; where, the third message is used for establishing a user-plane positioning connection, and the third message includes the second specified protocol.

In some embodiments, the sending unit 610 is further configured to send a fourth message to the second core network device;
the fourth message includes second confirmation information, and the second confirmation information is used to indicate that the terminal device accepts or rejects using the second specified protocol to transmit user-plane positioning information.

In some embodiments, in a case that the second confirmation information indicates that the terminal device rejects using the second specified protocol to transmit user-plane positioning information, the fourth message further includes a third cause value, where the third cause value is used to indicate a reason why the terminal device rejects using the second specified protocol to transmit user-plane positioning information.

In some embodiments, the third cause value includes one of the following: the second specified protocol is not supported, the first transport protocol is not supported, and the second transport protocol is not supported.

In some embodiments, the fourth message further includes the first capability.

In some embodiments, before the positioning negotiation apparatus 600 receives the third message, the sending unit 610 is further configured to send a fifth message to the second core network device; where the fifth message is used to obtain location information of the terminal device, and the fifth message includes the first capability.

In some embodiments, the second core network device is selected by the positioning negotiation apparatus 600 from at least one second core network device based on the first capability and/or the first specified protocol, and a transport protocol supported by the at least one second core network device for transmitting user-plane positioning information.

In some embodiments, in a case that the first message is used for performing network registration, the first message includes the first capability; or
in a case that the first message is used for establishing a user-plane positioning connection, the first message includes one or more of the following: the first capability, the first specified protocol, and the first confirmation information.

In some embodiments, the first transport protocol is a non-3rd generation partnership project 3GPP-defined user-plane location transport protocol, and the second transport protocol is a 3GPP-defined user-plane location transport protocol.

In some embodiments, the sending unit and the receiving unit may be communication interfaces or transceivers, or input/output interfaces of a communication chip or a system on chip. The processing unit may be one or more processors.

It should be understood that the positioning negotiation apparatus 600 according to this embodiment of this application may correspond to the first core network device in the method embodiments of this application, and the above and other operations and/or functions of the units of the positioning negotiation apparatus 600 are respectively used for implementing the corresponding procedures of the first core network device in the method 300 shown in FIG. 6. For brevity, details are not described herein again.

FIG. 14 is a schematic block diagram of a positioning negotiation apparatus 700 according to an embodiment of this application. As shown in FIG. 14, the positioning negotiation apparatus 700 includes:
a sending unit 710, configured to send a third message to a first core network device.

The third message is used for establishing a user-plane positioning connection, the third message includes a second specified protocol, and the second specified protocol includes a transport protocol specified by the positioning negotiation apparatus 700 for transmitting user-plane positioning information.

In some embodiments, the second specified protocol includes one of the following: a first transport protocol, a second transport protocol, the first transport protocol or the second transport protocol, and the first transport protocol and the second transport protocol.

In some embodiments, the positioning negotiation apparatus 700 further includes:
a receiving unit 720, configured to receive a fourth message from the first core network device.

The fourth message includes second confirmation information, and the second confirmation information is used to indicate that a terminal device accepts or rejects using the second specified protocol to transmit user-plane positioning information.

In some embodiments, in a case that the second confirmation information indicates that the terminal device rejects using the second specified protocol to transmit user-plane positioning information, the fourth message further includes a third cause value, where the third cause value is used to indicate a reason why the terminal device rejects using the second specified protocol to transmit user-plane positioning information.

In some embodiments, the third cause value includes one of the following: the second specified protocol is not supported, the first transport protocol is not supported, and the second transport protocol is not supported.

In some embodiments, the fourth message further includes a first capability, and the first capability is used to indicate a transport protocol supported by the terminal device for transmitting user-plane positioning information.

In some embodiments, before the positioning negotiation apparatus 700 sends the third message, the receiving unit 720 is further configured to receive a fifth message from the first core network device; where the fifth message is used to obtain location information of the terminal device, the fifth message includes a first capability, and the first capability is used to indicate a transport protocol supported by the terminal device for transmitting user-plane positioning information.

In some embodiments, the first capability includes one of the following:
the terminal device supports using the first transport protocol to transmit user-plane positioning information;
the terminal device supports using the second transport protocol to transmit user-plane positioning information; and
the terminal device supports using the first transport protocol and the second transport protocol to transmit user-plane positioning information.

In some embodiments, the first transport protocol is a non-3rd generation partnership project 3GPP-defined user-plane location transport protocol, and the second transport protocol is a 3GPP-defined user-plane location transport protocol.

In some embodiments, the sending unit and the receiving unit may be communication interfaces or transceivers, or input/output interfaces of a communication chip or a system on chip.

It should be understood that the positioning negotiation apparatus 700 according to this embodiment of this application may correspond to the second core network device in the method embodiments of this application, and the above and other operations and/or functions of the units of the positioning negotiation apparatus 700 are respectively used for implementing the corresponding procedures of the second core network device in the method 400 shown in FIG. 7. For brevity, details are not described herein again.

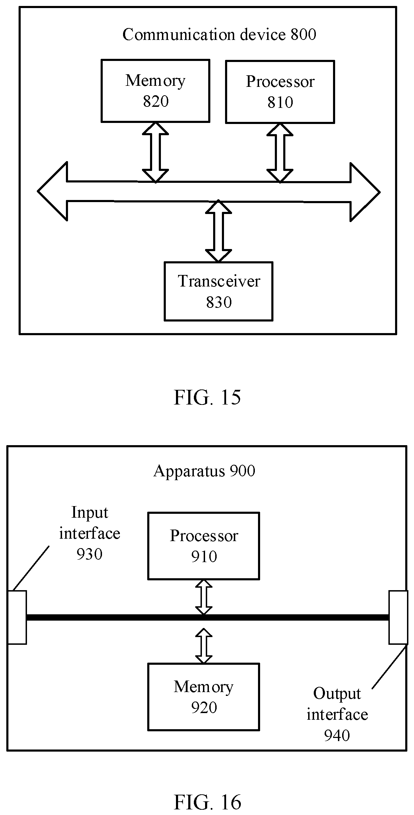

FIG. 15 is a schematic structural diagram of a communication device 800 according to an embodiment of this application. The communication device 800 shown in FIG. 15 includes a processor 810, and the processor 810 may call and run a computer program from a memory to implement the method in the embodiments of this application.

In some embodiments, as shown in FIG. 15, the communication device 800 may further include a memory 820. The processor 810 may call and run a computer program from the memory 820 to implement the method in the embodiments of this application.

The memory 820 may be a separate device independent of the processor 810, or may be integrated in the processor 810.

In some embodiments, as shown in FIG. 15, the communication device 800 may further include a transceiver 830, and the processor 810 may control the transceiver 830 to communicate with other devices. Specifically, the transceiver may send information or data to other devices or receive information or data sent by other devices.

The transceiver 830 may include a transmitter and a receiver. The transceiver 830 may further include antennas, and the number of antennas may be one or more.

In some embodiments, the processor 810 is capable of implementing functions of a processing unit in a terminal device, or the processor 810 is capable of implementing functions of a processing unit in a core network device. For brevity, details are not described herein again.

In some embodiments, the transceiver 830 is capable of implementing functions of a sending unit and a receiving unit in a terminal device. For brevity, details are not described herein again.

In some embodiments, the transceiver 830 is capable of implementing functions of a sending unit and a receiving unit in a core network device. For brevity, details are not described herein again.

In some embodiments, the communication device 800 may specifically be a core network device in the embodiments of this application, and the communication device 800 may implement corresponding processes implemented by the core network device in the methods of the embodiments of this application. For brevity, details are not described herein again.

In some embodiments, the communication device 800 may specifically be a terminal device in the embodiments of this application, and the communication device 800 may implement corresponding processes implemented by the terminal device in the methods of the embodiments of this application. For brevity, details are not described herein again.

FIG. 16 is a schematic structural diagram of an apparatus according to an embodiment of this application. The apparatus 900 shown in FIG. 16 includes a processor 910, and the processor 910 may call and run a computer program from a memory to implement the method in the embodiments of this application.

In some embodiments, as shown in FIG. 16, the apparatus 900 may further include a memory 920. The processor 910 may call and run a computer program from the memory 920 to implement the method in the embodiments of this application.

The memory 920 may be a separate device independent of the processor 910, or may be integrated in the processor 910.

In some embodiments, the processor 910 is capable of implementing functions of a processing unit in a terminal device, or the processor 910 is capable of implementing functions of a processing unit in a core network device. For brevity, details are not described herein again.

In some embodiments, the apparatus 900 may further include an input interface 930. The processor 910 may control the input interface 930 to communicate with other devices or chips, specifically, obtaining information or data sent by other devices or chips. Optionally, the processor 910 may be located inside or outside a chip.

In some embodiments, the input interface 930 is capable of implementing functions of a receiving unit in a terminal device, or the input interface 930 is capable of implementing functions of a receiving unit in a core network device.

In some embodiments, the apparatus 900 may further include an output interface 940. The processor 910 may control the output interface 940 to communicate with other devices or chips, specifically, outputting information or data to other devices or chips. Optionally, the processor 910 may be located inside or outside a chip.

In some embodiments, the output interface 940 is capable of implementing functions of a sending unit in a terminal device, or the output interface 940 is capable of implementing functions of a sending unit in a core network device.

In some embodiments, the apparatus may be applied to a core network device in the embodiments of this application, and the apparatus is capable of implementing corresponding processes implemented by the core network device in the methods of the embodiments of this application. For brevity, details are not described herein again.

In some embodiments, the apparatus may be applied to a terminal device in the embodiments of this application, and the apparatus is capable of implementing corresponding processes implemented by the terminal device in the methods of the embodiments of this application. For brevity, details are not described herein again.

In some embodiments, the apparatus mentioned in the embodiments of this application may alternatively be a chip. For example, it may be a system-on-chip, a system chip, a system-on-a-chip, a system on a chip, or the like.

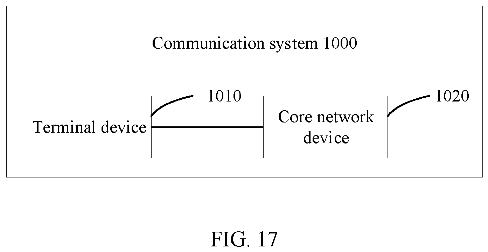

FIG. 17 is a schematic block diagram of a communication system 1000 according to an embodiment of this application. As shown in FIG. 17, the communication system 1000 includes a terminal device 1010 and a core network device 1020.

The terminal device 1010 may be configured to implement corresponding functions implemented by the terminal device in the foregoing methods, and the core network device 1020 may be configured to implement corresponding functions implemented by the core network device (the first core network device and/or the second core network device) in the foregoing methods. For brevity, details are not described herein again.

It should be understood that the processor in the embodiments of this application may be an integrated circuit chip having a signal processing capability. During implementation, the steps of the foregoing method embodiments can be completed by hardware integrated logic circuits in the processor or instructions in the form of software. The foregoing processor may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component; and may implement or execute methods, steps, and logical block diagrams disclosed in the embodiments of this application. The general-purpose processor may be a microprocessor or any regular processor. The steps of the methods disclosed with reference to the embodiments of this application may be directly implemented by a hardware decoding processor, or may be implemented by a combination of hardware and software modules in a decoding processor. The software module may be located in a storage medium mature in the art, such as a random access memory, a flash memory, a read-only memory, a programmable read-only memory or electrically erasable programmable memory, or a register. The storage medium is located in the memory, and the processor fetches information in the memory, and completes the steps of the foregoing method in combination with its hardware.

It can be understood that the memory in this embodiment of this application may be a volatile memory or a non-volatile memory, or may include both a volatile memory and a non-volatile memory. It should be noted that the memory described in this specification is intended to include but is not limited to these and any other suitable types of memories.

It should be understood that the above memories are illustrative but not restrictive. For example, the memory in the embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct rambus random access memory (Direct Rambus RAM, DR RAM), or the like. That is, the memories in the embodiments of this application are intended to include, but are not limited to, these and any other suitable types of memories.

A person of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When implemented in a form of a software functional unit and sold or used as an independent product, the functions may be stored in a computer-readable storage medium. For such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the method described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning negotiation method, comprising:
sending, by a terminal device, a first message to a first core network device, wherein the first message is used for performing network registration or establishing a user-plane positioning connection; wherein
the first message comprises one or more of the following: a first capability, a first specified protocol, and first confirmation information; and
the first capability is used to indicate a transport protocol supported by the terminal device for transmitting user-plane positioning information; the first specified protocol comprises a transport protocol that the terminal device expects to use for transmitting user-plane positioning information; and the first confirmation information is used to indicate whether the terminal device accepts or rejects using a second specified protocol to transmit user-plane positioning information, wherein the second specified protocol comprises a transport protocol specified by the first core network device or a second core network device for transmitting user-plane positioning information.

2. The method according to claim 1, wherein the first capability comprises one of the following:
the terminal device supports using the first transport protocol to transmit user-plane positioning information;
the terminal device supports using the second transport protocol to transmit user-plane positioning information; and
the terminal device supports using the first transport protocol and the second transport protocol to transmit user-plane positioning information.

3. The method according to claim 1, wherein the first specified protocol comprises one of the following:
a first transport protocol, a second transport protocol, the first transport protocol or the second transport protocol, and the first transport protocol and the second transport protocol.

4. The method according to claim 1, wherein the second specified protocol comprises one of the following:
a first transport protocol, a second transport protocol, the first transport protocol or the second transport protocol, and the first transport protocol and the second transport protocol.

5. The method according to claim 1, wherein in a case that the first message comprises the first confirmation information, and the first confirmation information indicates that the terminal device rejects using the second specified protocol to transmit the user-plane positioning information, the first message further comprises a first cause value, wherein the first cause value is used to indicate a reason why the terminal device rejects a user-plane positioning connection establishment request initiated by a network.

6. The method according to claim 5, wherein the first cause value comprises one of the following: the second specified protocol is not supported, a first transport protocol is not supported, and a second transport protocol is not supported.

7. The method according to claim 6, wherein the first message further comprises a transport protocol supported by the terminal device for transmitting user-plane positioning information.

8. The method according to any one of claims 1 to 7, wherein in a case that the first message is used for network registration, the first message comprises the first capability; or
in a case that the first message is used for establishing a user-plane positioning connection, the first message comprises one or more of the following: the first capability, the first specified protocol, and the first confirmation information.

9. The method according to any one of claims 1 to 8, wherein the method further comprises:
receiving, by the terminal device, a second message from the first core network device, wherein the second message is used for network registration or establishing a user-plane positioning connection, and the second message comprises one or more of the following: a second capability, the second specified protocol, and a second cause value; wherein
the second capability is used to indicate a network-supported transport protocol for transmitting user-plane positioning information, and the second cause value is used to indicate a reason why a network rejects a user-plane positioning connection establishment request initiated by the terminal device.

10. The method according to claim 9, wherein in a case that the first message comprises the first capability, the second message is received by the terminal device after the first message is sent, and the second message comprises the second capability; or
in a case that the first message comprises the first specified protocol, the second message is received by the terminal device after the first message is sent, the second message is used to indicate accepting a user-plane positioning connection establishment request initiated by the terminal device, and the second message carries the second specified protocol; or in a case that the first message comprises the first specified protocol, the second message is received by the terminal device after the first message is sent, the second message is used to indicate rejecting a user-plane positioning connection establishment request initiated by the terminal device, and the second message carries the second cause value; or
in a case that the first message comprises the first confirmation information, the second message is received by the terminal device before the first message is sent, and the second message carries the second specified protocol.

11. The method according to claim 9 or 10, wherein the second capability comprises one of the following:
the network does not support a user-plane positioning capability;
the network supports using the first transport protocol to transmit user-plane positioning information;
the network supports using the second transport protocol to transmit user-plane positioning information; and
the network supports using the first transport protocol and the second transport protocol to transmit user-plane positioning information.

12. The method according to claim 11, wherein the second capability, by indicating that the network supports the user-plane positioning capability, indicates that the network supports using the first transport protocol and/or the second transport protocol to transmit user-plane positioning information.

13. The method according to claim 9 or 10, wherein the second cause value comprises at least one of the following: the first specified protocol is not supported, the first transport protocol is not supported, the second transport protocol is not supported, and the second core network device is congested.

14. The method according to claim 13, wherein in a case that the second message carries the second cause value, the second message further comprises network-supported transport protocol information for transmitting user-plane positioning information.

15. The method according to any one of claims 9 to 14, wherein in a case that the second message is used for network registration, the second message comprises the second capability; or
in a case that the second message is used to establish a user-plane positioning connection, the second message comprises one or more of the following: the second capability, the second specified protocol, and the second cause value.

16. The method according to any one of claims 1 to 15, wherein the second specified protocol is determined by the first core network device or the second core network device.

17. The method according to claim 2, 3, 4, 11 or 12, wherein
the first transport protocol is a non-3rd generation partnership project 3GPP-defined user-plane location transport protocol, and the second transport protocol is a 3GPP-defined user-plane location transport protocol.

18. The method according to claim 2, 3, 4, 11, 12, or 17, wherein
the first transport protocol is secure user plane location SUPL, and the second transport protocol is location service user plane protocol LCS-UPP.

19. A positioning negotiation method, comprising:
sending, by a first core network device, a second message to a terminal device, wherein the second message is used for network registration or establishing a user-plane positioning connection; wherein
the second message comprises one or more of the following: a second capability, a second specified protocol, and a second cause value; and
the second capability is used to indicate a transport protocol supported by a network for transmitting user-plane positioning information, the second specified protocol comprises a transport protocol specified by the first core network device or a second core network device for transmitting user-plane positioning information, and the second cause value is used to indicate a reason why the network rejects a user-plane positioning connection establishment request initiated by the terminal device.

20. The method according to claim 19, wherein the second capability comprises one of the following:
the network does not support a user-plane positioning capability;
the network supports using the first transport protocol to transmit user-plane positioning information;
the network supports using the second transport protocol to transmit user-plane positioning information; and
the network supports using the first transport protocol and the second transport protocol to transmit user-plane positioning information.

21. The method according to claim 20, wherein the second capability, by indicating that the network supports the user-plane positioning capability, indicates that the network supports using the first transport protocol and/or the second transport protocol to transmit user-plane positioning information.

22. The method according to claim 19, wherein the second cause value comprises at least one of the following: a first specified protocol is not supported, a first transport protocol is not supported, a second transport protocol is not supported, and the second core network device is congested; and
the first specified protocol comprises a transport protocol that the terminal device expects to use for transmitting user-plane positioning information.

23. The method according to claim 22, wherein in a case that the second message carries the second cause value, the second message further comprises network-supported transport protocol information for transmitting user-plane positioning information.

24. The method according to claim 19, wherein the second specified protocol comprises one of the following: a first transport protocol, a second transport protocol, the first transport protocol or the second transport protocol, and the first transport protocol and the second transport protocol.

25. The method according to claim 19, wherein the second specified protocol is determined by the first core network device or the second core network device.

26. The method according to any one of claims 19 to 25, wherein in a case that the second message is used for network registration, the second message comprises the second capability; or
in a case that the second message is used to establish a user-plane positioning connection, the second message comprises one or more of the following: the second capability, the second specified protocol, and the second cause value.

27. The method according to any one of claims 19 to 26, wherein the method further comprises:
receiving, by the first core network device, a first message from the terminal device, wherein the first message is used for network registration or establishing a user-plane positioning connection; wherein
the first message comprises one or more of the following: a first capability, a first specified protocol, and first confirmation information; and
the first capability is used to indicate a transport protocol supported by the terminal device for transmitting user-plane positioning information; the first specified protocol comprises a transport protocol that the terminal device expects to use for transmitting user-plane positioning information; and the first confirmation information is used to indicate whether the terminal device accepts or rejects using the second specified protocol to transmit user-plane positioning information.

28. The method according to claim 27, wherein in a case that the first message comprises the first capability, the second message is sent by the first core network device after the first message is received, and the second message comprises the second capability; or
in a case that the first message comprises the first specified protocol, the second message is sent by the first core network device after the first message is received, the second message is used to indicate accepting a user-plane positioning connection establishment request initiated by the terminal device, and the second message carries the second specified protocol; or in a case that the first message comprises the first specified protocol, the second message is sent by the first core network device after the first message is received, the second message is used to indicate rejecting a user-plane positioning connection establishment request initiated by the terminal device, and the second message carries the second cause value; or
in a case that the first message comprises the first confirmation information, the second message is sent by the first core network device before the first message is received, and the second message carries the second specified protocol.

29. The method according to claim 27 or 28, wherein the first capability comprises one of the following:
the terminal device supports using the first transport protocol to transmit user-plane positioning information;
the terminal device supports using the second transport protocol to transmit user-plane positioning information; and
the terminal device supports using the first transport protocol and the second transport protocol to transmit user-plane positioning information.

30. The method according to claim 27 or 28, wherein the first specified protocol comprises one of the following: a first transport protocol, a second transport protocol, the first transport protocol or the second transport protocol, and the first transport protocol and the second transport protocol.

31. The method according to claim 27 or 28, wherein in a case that the first message comprises the first confirmation information, and the first confirmation information indicates that the terminal device rejects using the second specified protocol to transmit the user-plane positioning information, the first message further comprises a first cause value, wherein the first cause value is used to indicate a reason why the terminal device rejects a user-plane positioning connection establishment request initiated by a network.

32. The method according to claim 31, wherein the first cause value comprises one of the following: the second specified protocol is not supported, the first transport protocol is not supported, and the second transport protocol is not supported.

33. The method according to claim 32, wherein the first message further comprises a transport protocol supported by the terminal device for transmitting user-plane positioning information.

34. The method according to any one of claims 27 to 33, wherein the method further comprises:
based on the first capability and/or the first specified protocol, and a transport protocol supported by at least one second core network device for transmitting user-plane positioning information, selecting, by the first core network device, a second core network device from the at least one second core network device to establish a user-plane positioning connection with the terminal device; and/or
determining, by the first core network device, the second specified protocol based on the first capability and/or the first specified protocol and a transport protocol supported by at least one second core network device for transmitting user-plane positioning information.

35. The method according to any one of claims 27 to 33, wherein before the first core network device sends the second message, the method further comprises:
receiving, by the first core network device, a third message from the second core network device; wherein the third message is used for establishing a user-plane positioning connection, and the third message comprises the second specified protocol.

36. The method according to claim 35, wherein the method further comprises:
sending, by the first core network device, a fourth message to the second core network device; wherein
the fourth message comprises second confirmation information, and the second confirmation information is used to indicate that the terminal device accepts or rejects using the second specified protocol to transmit user-plane positioning information.

37. The method according to claim 36, wherein, in a case that the second confirmation information indicates that the terminal device rejects using the second specified protocol to transmit user-plane positioning information, the fourth message further comprises a third cause value, wherein the third cause value is used to indicate a reason why the terminal device rejects using the second specified protocol to transmit user-plane positioning information.

38. The method according to claim 37, wherein the third cause value comprises one of the following: the second specified protocol is not supported, the first transport protocol is not supported, and the second transport protocol is not supported.

39. The method according to claim 38, wherein the fourth message further comprises the first capability.

40. The method according to any one of claims 35 to 39, wherein before the first core network device receives the third message, the method further comprises:
sending, by the first core network device, a fifth message to the second core network device; wherein the fifth message is used to obtain location information of the terminal device, and the fifth message comprises the first capability.

41. The method according to any one of claims 35 to 40, wherein the second core network device is selected by the first core network device from at least one second core network device based on the first capability and/or the first specified protocol, and a transport protocol supported by the at least one second core network device for transmitting user-plane positioning information.

42. The method according to any one of claims 27 to 41, wherein in a case that the first message is used for network registration, the first message comprises the first capability; or
in a case that the first message is used for establishing a user-plane positioning connection, the first message comprises one or more of the following: the first capability, the first specified protocol, and the first confirmation information.

43. The method according to claim 20, 21, 22, 23, 24, 29, 30, 32, 33, 38, or 39, wherein the first transport protocol is a non-3rd generation partnership project 3GPP-defined user-plane location transport protocol, and the second transport protocol is a 3GPP-defined user-plane location transport protocol.

44. The method according to claim 20, 21, 22, 23, 24, 29, 30, 32, 33, 38, 39, or 43, wherein the first transport protocol is secure user plane location SUPL, and the second transport protocol is location service user plane protocol LCS-UPP.

45. A positioning negotiation method, comprising:
sending, a second core network device, a third message to a first core network device; wherein
the third message is used for establishing a user-plane positioning connection, the third message comprises a second specified protocol, and the second specified protocol comprises a transport protocol specified by the second core network device for transmitting user-plane positioning information.

46. The method according to claim 45, wherein the second specified protocol comprises one of the following: a first transport protocol, a second transport protocol, the first transport protocol or the second transport protocol, and the first transport protocol and the second transport protocol.

47. The method according to claim 45 or 46, wherein the method further comprises:
receiving, by the second core network device, a fourth message from the first core network device; wherein
the fourth message comprises second confirmation information, and the second confirmation information is used to indicate that a terminal device accepts or rejects using the second specified protocol to transmit user-plane positioning information.

48. The method according to claim 47, wherein in a case that the second confirmation information indicates that the terminal device rejects using the second specified protocol to transmit user-plane positioning information, the fourth message further comprises a third cause value, wherein the third cause value is used to indicate a reason why the terminal device rejects using the second specified protocol to transmit user-plane positioning information.

49. The method according to claim 48, wherein the third cause value comprises one of the following: the second specified protocol is not supported, the first transport protocol is not supported, and the second transport protocol is not supported.

50. The method according to claim 49, wherein the fourth message further comprises a first capability, and the first capability is used to indicate a transport protocol supported by the terminal device for transmitting user-plane positioning information.

51. The method according to any one of claims 45 to 50, wherein before the second core network device sends the third message, the method further comprises:
receiving, by the second core network device, a fifth message from the first core network device; wherein the fifth message is used to obtain location information of the terminal device, the fifth message comprises a first capability, and the first capability is used to indicate a transport protocol supported by the terminal device for transmitting user-plane positioning information.

52. The method according to claim 50 or 51, wherein the first capability comprises one of the following:
the terminal device supports using the first transport protocol to transmit user-plane positioning information;
the terminal device supports using the second transport protocol to transmit user-plane positioning information; and
the terminal device supports using the first transport protocol and the second transport protocol to transmit user-plane positioning information.

53. The method according to claim 46, 49, 50, or 52, wherein the first transport protocol is a non-3rd generation partnership project 3GPP-defined user-plane location transport protocol, and the second transport protocol is a 3GPP-defined user-plane location transport protocol.

54. The method according to claim 46, 49, 50, 52, or 53, wherein
the first transport protocol is secure user plane location SUPL, and the second transport protocol is location service user plane protocol LCS-UPP.

55. A positioning negotiation apparatus, comprising:
a sending unit, configured to send a first message to a first core network device, wherein the first message is used for performing network registration or establishing a user-plane positioning connection; wherein
the first message comprises one or more of the following: a first capability, a first specified protocol, and first confirmation information; and
the first capability is used to indicate a transport protocol supported by the positioning negotiation apparatus for transmitting user-plane positioning information; the first specified protocol comprises a transport protocol that the positioning negotiation apparatus expects to use for transmitting user-plane positioning information; and the first confirmation information is used to indicate whether the positioning negotiation apparatus accepts or rejects use of a second specified protocol for transmitting user-plane positioning information, wherein the second specified protocol comprises a transport protocol specified by the first core network device or a second core network device for transmitting user-plane positioning information.

56. A positioning negotiation apparatus, comprising:
a sending unit, configured to send a second message to a terminal device, wherein the second message is used for network registration or establishing a user-plane positioning connection; wherein
the second message comprises one or more of the following: a second capability, a second specified protocol, and a second cause value; and
the second capability is used to indicate a transport protocol supported by a network for transmitting user-plane positioning information, the second specified protocol comprises a transport protocol specified by the positioning negotiation apparatus or a second core network device for transmitting user-plane positioning information, and the second cause value is used to indicate a reason why the network rejects a user-plane positioning connection establishment request initiated by the terminal device.

57. A positioning negotiation apparatus, comprising:
a sending unit, configured to send a third message to a first core network device; wherein
the third message is used for establishing a user-plane positioning connection, the third message comprises a second specified protocol, and the second specified protocol comprises a transport protocol specified by the positioning negotiation apparatus for transmitting user-plane positioning information.

58. A terminal device, comprising a memory, a processor, and a computer program stored in the memory and capable of running on the processor, wherein when the computer program is executed by the processor, steps of the method according to any one of claims 1 to 18 are implemented.

59. A core network device, wherein the core network device is a first core network device, and the core network device comprises a memory, a processor, and a computer program stored in the memory and capable of running on the processor, wherein when the computer program is executed by the processor, steps of the method according to any one of claims 19 to 44 are implemented.

60. A core network device, wherein the core network device is a second core network device, and the core network device comprises a memory, a processor, and a computer program stored in the memory and capable of running on the processor, wherein when the computer program is executed by the processor, steps of the method according to any one of claims 45 to 54 are implemented.

61. A computer-readable storage medium, wherein a computer program is stored in the computer-readable storage medium, and when the computer program is executed by a processor, the steps of the method according to any one of claims 1 to 18 are implemented, or the steps of the method according to any one of claims 19 to 44 are implemented, or the steps of the method according to any one of claims 45 to 54 are implemented.
